# EUROPEAN PATENT APPLICATION

(11) **EP 4 539 580 A1**
(43) Date of publication of application: **16.04.2025**
(21) Application number: 24206046.5
(22) Date of filing: 11.10.2024
(51) Int. Cl.: H04W 74/00, H04W 74/0816, H04W 84/12

(54) **EXTENDED RANGE RELAYING**

(30) Priority: 12.10.2023 US 202363543761 P
(71) Applicant: Comcast Cable Communications, LLC, Philadelphia, PA 19103 (US)
(72) Inventor: ERKUCUK, Serhat, Philadelphia, 19103 (US); KIM, Jeongki, Philadelphia, 19103 (US); DINAN, Esmael Hejazi, Philadelphia, 19103 (US); LANANTE, Leonardo Alisasis, Philadelphia, 19103 (US)
(74) Representative: V.O.

(57) **Abstract**

An access point may communicate with computing devices, such as stations. Timing information may be provided to a first computing device by the access point to inform when the first computing device may communicate with a second computing device. Using the timing information, the second computing device may communicate, via the first computing device, with the access point.

## Description

### CROSS-REFERENCE TO RELATED APPLICATIONS

This application claims the benefit of U.S. Provisional Application No. 63/543,761, filed on October 12, 2023. The above referenced applications are hereby incorporated by reference in their entireties.

### BACKGROUND

An access point communicates with computing devices, such as stations. Data units are communicated between the access point and the computing devices.

### SUMMARY

The following summary presents a simplified summary of certain features. The summary is not an extensive overview and is not intended to identify key or critical elements.

An access point may communicate with one or more computing devices, such as stations. A first frame comprising timing information may be provided to a first computing device by the access point, for communication between the first computing device and a second computing device. The timing information may comprise, for example, a first time period associated with the first computing device, a second time period associated with the second computing device, and an indication for the first computing device to send a second frame to the second computing device. Based on the indication, the second frame may be provided to the second computing device, by the first computing device, in order to inform the second computing device that the second computing device may communicate during the second time period. The first computing device may operate as a relay device to send an uplink signal from the second computing device to the access point, which may operate to extend a communication range of the access point.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows example devices in a communication network.
FIG. 3 shows an example format of a Medium Access Control (MAC) frame.
FIG. 4 shows an example of a Quality of Service (QoS) null frame indicating buffer status information.
FIG. 5 shows an example format of a physical layer (PHY) protocol data unit (PPDU).
FIG. 6 shows an example of a sub-1 GHz (S1G) relay architecture.
FIG. 7 shows an example of source-relay-destination link.
FIG. 8 shows an example of relaying without transmission opportunity (TXOP) protection.
FIG. 9 shows an example of Request-to-Send (RTS)/Clear-to-Send (CTS) procedure.
FIG. 10 shows an example of relaying with TXOP protection.
FIG. 11 shows an example of a Multi-User Request-to-Send (MU-RTS) trigger frame.
FIG. 12 shows an example of a common info field of an MRTT frame.
FIG. 13 shows an example of a triggered transmission opportunity (TXOP) sharing (TXS) procedure (e.g., Mode =1).
FIG. 14 shows an example of a triggered TXS procedure (e.g., Mode =2).
FIG. 15 shows an example of a TXS procedure for allocating time within an obtained TXOP to multiple STAs, with a respective triggered TXOP sharing mode indicated for each STA.
FIG. 16 shows an example of a TXS-based relaying procedure.
FIG. 17 shows an example of a TXS-based relaying procedure.
FIG. 18 shows an example of a TXS-based relaying procedure.
FIG. 19 shows an example problem in a TXS-based relaying procedure.
FIG. 20 shows an example of a TXS-based relaying procedure for relaying uplink traffic from a STA to an AP.
FIG. 21 shows an example of a TXS-based relaying procedure for relaying uplink traffic from a STA to an AP.
FIG. 22 shows an example of a TXS-based relaying procedure for relaying downlink traffic from an AP to a STA.
FIG. 23 shows an example of a TXS-based relaying procedure for relaying downlink traffic from an AP to a STA.
FIG. 24 shows an example of a TXS-based relaying procedure for relaying downlink traffic from an AP to a STA.
FIG. 25A shows an example of an RTS frame.
FIG. 25B shows an example of an extended control frame.
FIG. 26 shows an example method of a relaying procedure.
FIG. 27 shows an example method of a relaying procedure.
FIG. 28 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

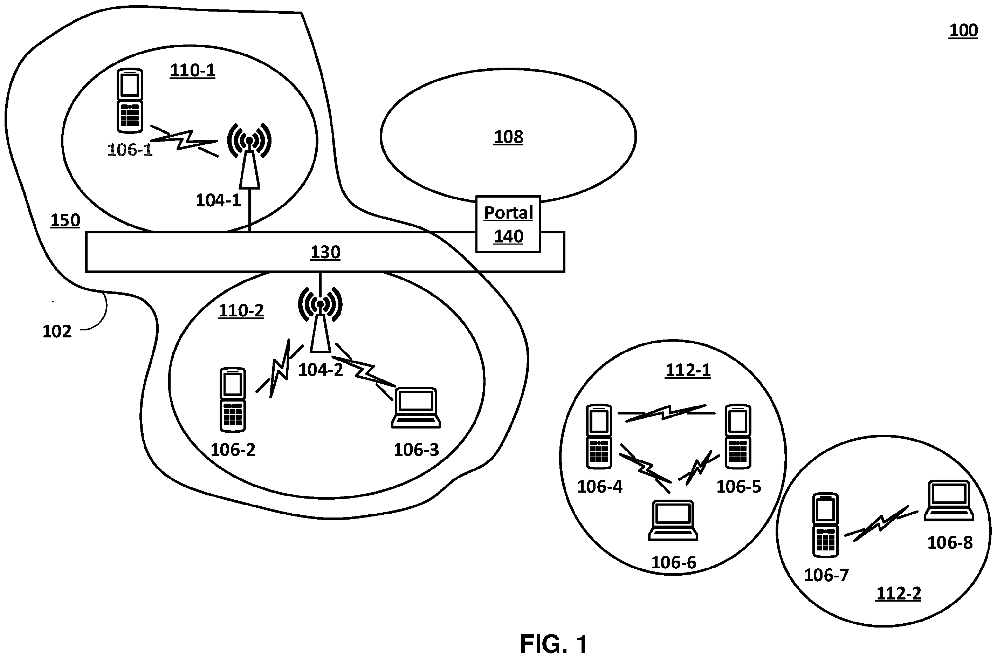

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP station) and at least one station (station or non-AP station). For example, BSS 110-1 includes an AP 104-1 and a station 106-1, and BSS 110-2 includes an AP 104-2 and stations 106-2 and 106-3. The AP and the at least one station in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more APs (e.g., APs 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where stations 106-4, 106-5 and 106-6 may be configured to form a first IBSS 112-1 and stations 106-7 and 106-8 may be configured to form a second IBSS 112-2. An ad-hoc network and/or IBSS is a network that includes a plurality of stations without a centralized communication device, such as an AP. The plurality of stations may be configured to communicate without requiring the presence of an AP. For example, the plurality of stations in the IBSS may communicate with each other using peer-to-peer communication (e.g., not via an AP). IBSSs do not include a centralized management entity (e.g., an AP) configured to perform a centralized management. stations within an IBSS are managed in a distributed manner. stations forming an IBSS may be fixed and/or mobile. The stations (e.g., stations 106-4, 106-5, 106-6, 106-7, 106-8) may or may not be permitted to access the DS 130 to constitute a self-contained network.

A station may comprise one or more layers in accordance with the open systems interconnection (OSI) model. For example, stations may comprise a medium access control (MAC) layer that may be in accordance with a defined standard (e.g., an IEEE 802.11 standard, or any other standard). A physical (PHY) layer interface for a radio medium may include the APs and the non-AP stations (stations). The station may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a station. stations may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

A frequency band may include one or more sub-bands or frequency channels. For example, PPDUs conforming to the IEEE 802.11n, 802.11ac, 802.11ax and/or 802.11be standard amendments may be transmitted over the 2.4 GHz, 5 GHz, and/or 6 GHz bands, each of which may be divided into multiple 20 MHz channels. The PPDUs may be transmitted over a physical channel having a minimum bandwidth of 20 MHz. Larger channels may be formed through channel bonding. For example, PPDUs may be transmitted over physical channels having bandwidths of 40 MHz, 80 MHz, 160 MHz, or 320 MHz by bonding together multiple 20 MHz channels.

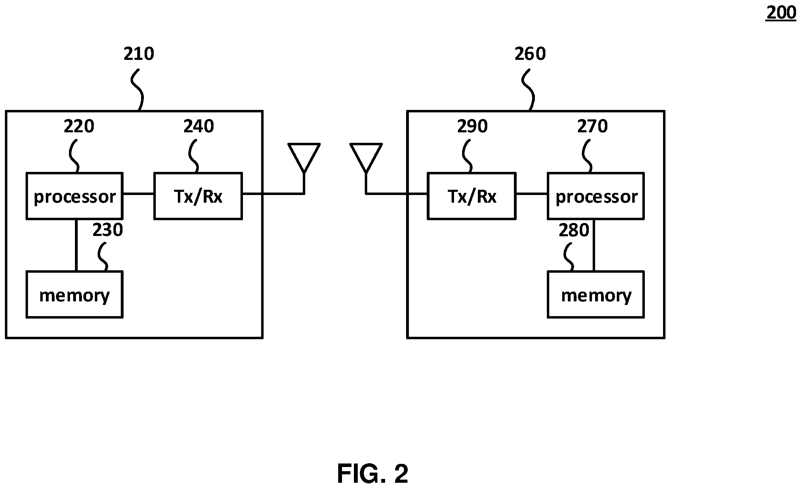

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP station) and the communication device 260 may operate as a station (e.g., a non-AP station). The communication device 210 may operate as a station (e.g., a non-AP station) and the communication device 260 may operate as an AP (e.g., an AP station). Also, or alternatively, the communication device 210 and the communication device 260 may both operate as stations (e.g., a non-AP stations) or may both operate as APs (e.g., AP stations).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the station as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the station as described herein.

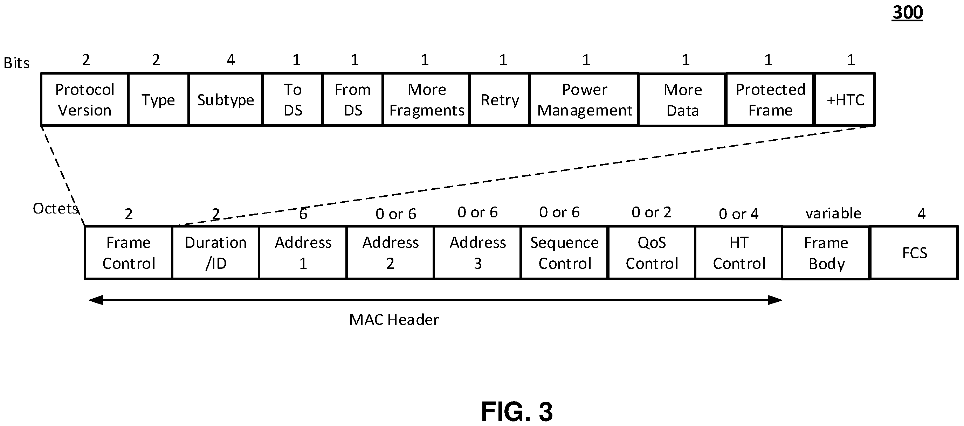

FIG. 3 shows an example format of a MAC frame. In operation, a station may construct a subset of MAC frames for transmission and may decode a subset of received MAC frames upon validation. The particular subsets of frames that a station may construct and/or decode may be determined by the functions supported by the station. A station may validate a received MAC frame using a frame check sequence (FCS) contained in the frame and may interpret certain fields from the MAC headers of all frames.

As shown in FIG. 3, a MAC frame may comprise a MAC header, a variable length frame body, and a frame check sequence (FCS). The MAC header may comprise a frame control field, an optional duration/ID field, address fields, an optional sequence control field, an optional QoS control field, and an optional high throughput (HT) control field.

The frame control field may comprise the following subfields: protocol version, type, subtype, To DS, From DS, more fragments, retry, power management, more data, protected frame, and +HTC (high throughput control). The protocol version subfield is invariant in size and placement across all revisions of the IEEE 802.11 standard. The value of the protocol version subfield may be 0 for MAC frames.

The type and subtype subfields together identify the function of the MAC frame. There are three frame types: control, data, and management. Each of the frame types has several defined subtypes. Bits within the subtype subfield may be used to indicate a specific modification of the basic data frame (subtype 0). For example, in data frames, the most significant bit (MSB) of the subtype subfield, bit 7 (B7) of the frame control field, is defined as the QoS subfield. For example, if the QoS subfield is set to 1, it may indicate a QoS subtype data frame, which is a data frame that contains a QoS control field in its MAC header. The second MSB of the subtype field, bit 6 (B6) of the frame control field, if set to 1 in data subtypes, may indicate a data frame that contain no frame body field.

The To DS subfield may indicate whether a data frame is destined to the distribution system (DS). The From DS subfield may indicate whether a data frame originates from the DS. The more fragments subfield may be set to 1 in all data or management frames that have another fragment to follow of the MAC service data unit (MSDU) or MAC management protocol data unit (MMPDU) carried by the MAC frame. The more fragments subfield may be set to 0 in all other frames in which the more fragments subfield is present.

The retry subfield may be set to 1 in any data or management frame that is a retransmission of an earlier frame. The retry subfield may be set to 0 in all other frames in which the retry subfield is present. A receiving station may use this indication to aid in the process of eliminating duplicate frames. These rules may not apply for frames sent by a station under a block agreement. The power management subfield may be used to indicate the power management mode of a station.

The More Data subfield may indicate to a station in power save (PS) mode that bufferable units (Bus) are buffered for that station at the AP. The more data subfield may be valid in individually addressed data or management frames sent (e.g., transmitted) by an AP to a station in PS mode. The more data subfield may be set to 1 to indicate that at least one additional buffered BU is present for the station.

The protected frame subfield may be set to 1, for example, if the frame body field contains information that has been processed by a cryptographic encapsulation algorithm. The +HTC subfield may indicate that the MAC frame contains an HT control field.

The duration/ID field of the MAC header may indicate various contents depending on frame type and subtype and the QoS capabilities of the sending station. For example, in control frames of the power save poll (PS-Poll) subtype, the duration/ID field may carry an association identifier (AID) of the station that sent (e.g., transmitted) the frame in the 14 least significant bits (LSB), and the two most significant bits (MSB) may be both set to 1. In other frames sent by stations, the duration/ID field may contain a duration value (in microseconds) which may be used by a recipient to update a network allocation vector (NAV). The NAV may be a counter that indicates to a station an amount of time during which the station must defer from accessing the shared medium.

There may be up to four address fields in the MAC frame format. These fields may be used to indicate the basic service set identifier (BSSID), source address (SA), destination address (DA), transmitting address (TA), and receiving address (RA). Certain frames might not contain some of the address fields. Certain address field usage may be specified by the relative position of the address field (1-4) within the MAC header, independent of the type of address present in that field. For example, the address 1 field always identifies the intended receiver(s) of the frame, and the address 2 field, where present, always identifies the transmitter of the frame.

The sequence control field may comprise two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information can vary by frame type, frame subtype, and type of sending (e.g., transmitting) station. The QoS control field is present in all data frames in which the QoS subfield of the subtype subfield is equal to 1.

The HT control field is present in QoS data, QoS null, and management frames as determined by the +HTC subfield of the frame control field. The frame body field is a variable length field that contains information specific to individual frame types and subtypes. It may comprise one or more MSDUs or MMPDUs. The minimum length of the frame body is 0 octets. The FCS field may contain a 32-bit Cyclic Redundancy Check (CRC) code. The FCS field value may be calculated over all of the fields of the MAC header and the frame body field.

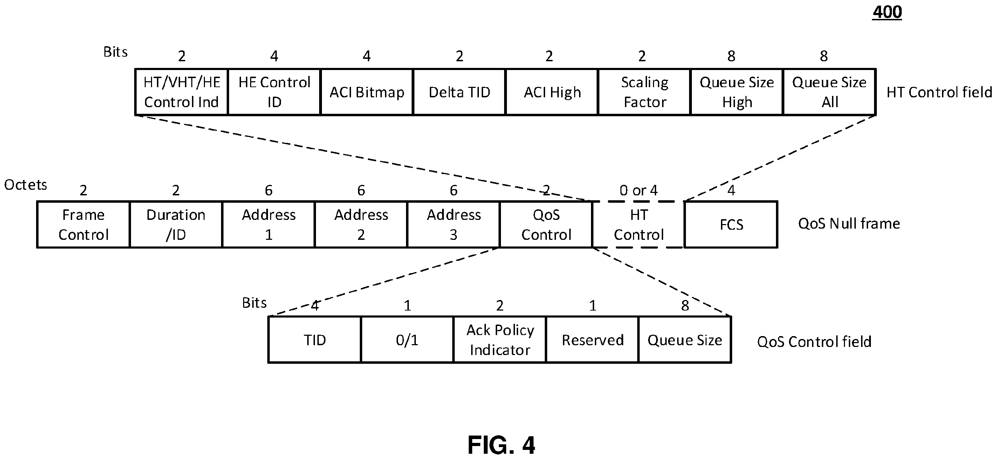

FIG. 4 shows an example of a QoS null frame indicating buffer status information. A QoS null frame refers to a QoS data frame with an empty frame body. A QoS null frame may comprise a QoS control field and an optional HT control field which may contain a buffer status report (BSR) control subfield. A QoS null frame indicating buffer status information may be sent (e.g., transmitted) by a station to an AP.

The QoS control field may comprise a traffic identifier (TID) subfield, an ack policy indicator subfield, and a queue size subfield (or a transmission opportunity (TXOP) duration requested subfield). The TID subfield may identify the TC or TS of traffic for which a TXOP is being requested, through the setting of the TXOP duration requested or queue size subfield. The encoding of the TID subfield depends on the access policy (e.g., allowed value 0 to 7 for enhanced distributed channel access (EDCA) access policy to identify user priority for either TC or TS). The ack policy indicator subfield, together with other information, may identify the acknowledgment policy followed upon delivery of the MPDU (e.g., normal ack, implicit block ack request, no ack, block ack, etc.)

The queue size subfield may be an 8-bit field that indicates the amount of buffered traffic for a given TC or TS at the station for transmission to the AP identified by the receiver address of the frame containing the subfield. The queue size subfield may be present in QoS null frames sent by a station, for example, if bit 4 of the QoS control field is set to 1. The AP may use information contained in the queue size subfield to determine the TXOP (transmission opportunity) duration assigned to the station or to determine the uplink (UL) resources assigned to the station.

In a frame sent by or to a non-High Efficiency (non-HE) station, the following rules may apply to the queue size value:
- The queue size value is the approximate total size, rounded up to the nearest multiple of 256 octets and expressed in units of 256 octets, of all MSDUs and A-MSDUs buffered at the station (excluding the MSDU or A-MSDU contained in the present QoS Data frame) in the delivery queue used for MSDUs and A-MSDUs with TID values equal to the value indicated in the TID subfield of the QoS Control field;
- A queue size value of 0 is used solely to indicate the absence of any buffered traffic in the queue used for the specified TID;
- A queue size value of 254 is used for all sizes greater than 64 768 octets;
- A queue size value of 255 is used to indicate an unspecified or unknown size.

In a frame sent by an HE station to an HE AP, the following rules may apply to the queue size value:
- The queue size value, *QS*, is the approximate total size in octets, of all MSDUs and A-MSDUs buffered at the station (including the MSDUs or A-MSDUs contained in the same PSDU as the frame containing the queue size subfield) in the delivery queue used for MSDUs and A-MSDUs with TID values equal to the value indicated in the TID subfield of the QoS control field;
- The queue size subfield comprises a scaling factor subfield in bits B14-B 15 of the QoS control field and an unscaled value, UV, in bits B8-B13 of the QoS control field. The scaling factor subfield provides the scaling factor, *on.*

A station may obtain the queue size, *QS*, from a received QoS control field, which contains a scaling factor, *SF*, and an unscaled value, *UV*, as follows:

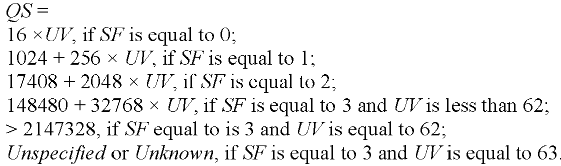

The TXOP duration requested subfield, which may be included instead of the queue size subfield, may indicate the duration, in units of 32 microseconds (us), that the sending station determines it needs for its next TXOP for the specified TID. The TXOP duration requested subfield may be set to 0 to indicate that no TXOP is requested for the specified TID in the current service period (SP). The TXOP duration requested subfield may be set to a nonzero value to indicate a requested TXOP duration in the range of 32 us to 8160 us in increments of 32 us.

The HT control field may comprise a BSR control subfield which may contain buffer status information used for UL MU operation. The BSR control subfield may be formed by a control ID, an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC is included in the queue size all subfield, and set to 0 otherwise, except that if the ACI bitmap subfield is 0 and the delta TID subfield is 3, then the buffer status of all 8 TIDs is included.

The delta TID subfield, together with the values of the ACI bitmap subfield, may indicate the number of TIDs for which the station is reporting the buffer status. The ACI high subfield may indicate the ACI of the AC for which the BSR is indicated in the queue size high subfield. The ACI to AC mapping is defined as ACI value 0 mapping to AC_BE, ACI value 1 mapping to AC_BK, ACI value 2 mapping to AC_VI, and ACI value 3 mapping to AC_VO. The scaling factor subfield may indicate the unit SF, in octets, of the queue size high and queue size all subfields.

The queue size high subfield may indicate the amount of buffered traffic, in units of SF octets, for the AC identified by the ACI high subfield, that is intended for the station identified by the receiver address of the frame containing the BSR control subfield. The queue size all subfield may indicate the amount of buffered traffic, in units of SF octets, for all ACs identified by the ACI Bitmap subfield, that is intended for the station identified by the receiver address of the frame containing the BSR control subfield.

The queue size values in the queue size high and queue size all subfields are the total sizes, rounded up to the nearest multiple of SF octets, of all MSDUs and A-MSDUs buffered at the station (including the MSDUs or A-MSDUs contained in the same PSDU as the frame containing the BSR control subfield) in delivery queues used for MSDUs and A-MSDUs associated with AC(s) that are specified in the ACI high and ACI bitmap subfields, respectively.

A queue size value of 254 in the queue size high and queue size all subfields may indicate that the amount of buffered traffic is greater than 254 × SF octets. A queue size value of 255 in the queue size high and queue size all subfields may indicate that the amount of buffered traffic is an unspecified or unknown size. The queue size value of QoS data frames containing fragments may remain constant even if the amount of queued traffic changes as successive fragments are sent (e.g., transmitted).

MAC service may provide peer entities with the ability to exchange MSDUs. To support this service, a local MAC may use the underlying PHY-level service to transport the MSDUs to a peer MAC entity. Such asynchronous MSDU transport may be performed on a connectionless basis.

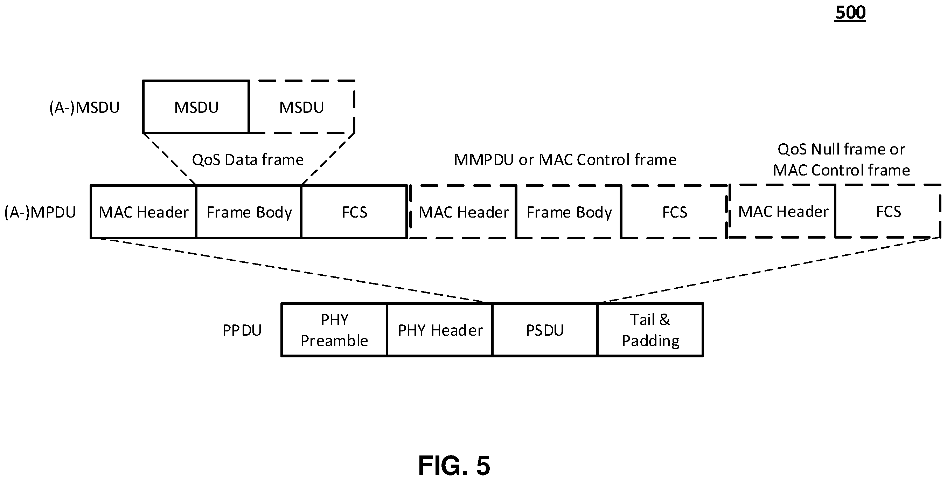

FIG. 5 shows an example format of a PPDU. As shown, the PPDU may comprise a PHY preamble, a PHY header, a PSDU, and tail and padding bits.

The PSDU may comprise one or more MPDUs, such as a QoS data frame, an MMPDU, a MAC control frame, or a QoS null frame. For an MPDU carrying a QoS data frame, the frame body of the MPDU may comprise a MSDU or an A-MSDU. By default, MSDU transport is on a best-effort basis. That is, there is no guarantee that a sent (e.g., transmitted) MSDU will be delivered successfully. The QoS facility may use a traffic identifier (TID) to specify differentiated services on a per-MSDU basis.

A station may differentiate MSDU delivery according to designated traffic category (TC) or traffic stream (TS) of individual MSDUs. The MAC sublayer entities may determine a user priority (UP) for an MSDU based on a TID value provided with the MSDU. The QoS facility may support eight UP values. The UP values may range from 0 to 7 and may form an ordered sequence of priorities, with 1 being the lowest value, 7 the highest value, and 0 falling between 2 and 3.

An MSDU with a particular UP may belong to a traffic category with that UP. The UP may be provided with each MSDU at the medium access control service access point (MAC SAP) directly in a UP parameter. An aggregate MPDU (A-MPDU) may comprise MPDUs with different TID values.

A station may deliver buffer status reports (BSRs) to assist an AP in allocating UL MU resources. The station may either implicitly deliver BSRs in the QoS control field or BSR control subfield of any frame sent (e.g., transmitted) to the AP (unsolicited BSR) or explicitly deliver BSRs in a frame sent to the AP, for example, based on (e.g., in response to) a BSRP Trigger frame (solicited BSR).

The buffer status reported in the QoS control field may comprise a queue size value for a given TID. The buffer status reported in the BSR control field may comprise an ACI bitmap, delta TID, a high priority AC, and two queue sizes. A station may report buffer status to the AP, in the QoS control field, of sent (e.g., transmitted) QoS null frames and QoS data frames and, in the BSR control subfield (if present), of sent (e.g., transmitted) QoS null frames, QoS data frames, and management frames as defined below.

The station may report the queue size for a given TID in the queue size subfield of the QoS control field of sent (e.g., transmitted) QoS data frames or QoS null frames; the station may set the queue size subfield to 255 to indicate an unknown/unspecified queue size for that TID. The station may aggregate multiple QoS data frames or QoS null frames in an A-MPDU to report the queue size for different TIDs.

The station may report buffer status in the BSR control subfield of sent (e.g., transmitted) frames if the AP has indicated its support for receiving the BSR control subfield. A High-Efficiency (HE) station may report the queue size for a preferred AC, indicated by the ACI high subfield, in the queue size high subfield of the BSR control subfield. The station may set the queue size high subfield to 255 to indicate an unknown/unspecified queue size for that AC. A HE station may report the queue size for ACs indicated by the ACI bitmap subfield in the queue size all subfield of the BSR control subfield. The station may set the queue size all subfield to 255 to indicate an unknown/unspecified BSR for those ACs.

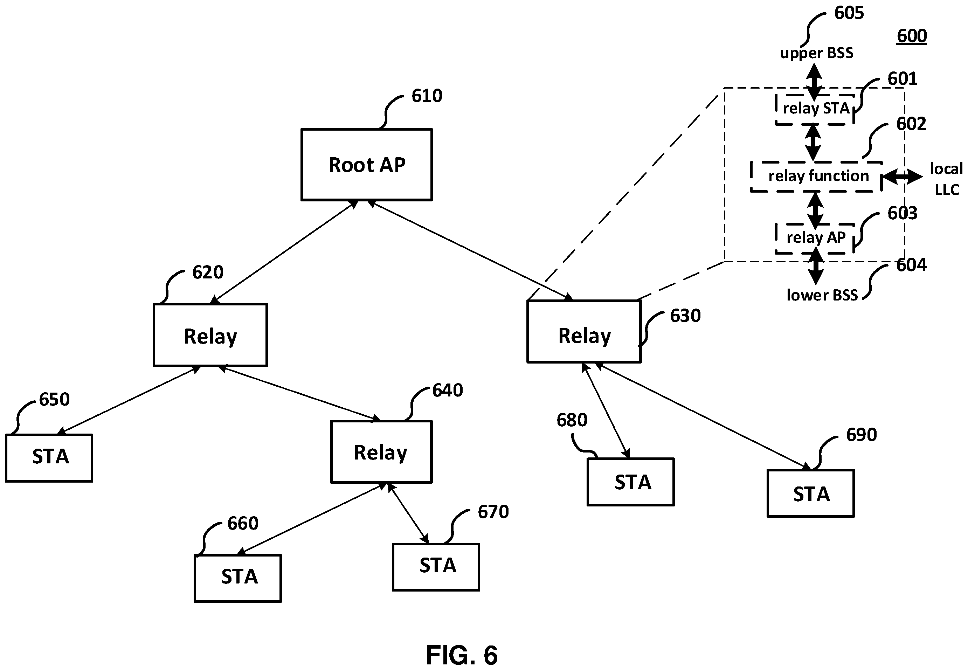

FIG. 6 shows an example of a sub-1 GHz (S1G) relay architecture. An example S1G relay architecture 600 may be an example based on the S1G relay operation as defined in section 10.54.1 of the IEEE 802.11 standard draft "IEEE P802.11-REVme^{™}/D2.1, January 2023" and/or any other release, version, and/or standard for wireless communications. As shown in FIG. 6, the example S1G relay architecture 600 may include a root AP 610, S1G relays 620, 630 and 640, and STAs 650, 660, 670, 680 and 690. A S1G relay is a mechanism for expanding the coverage area of an AP, referred to as the root AP. For example, the example S1G relay architecture 600 may be used to expand the coverage area of root AP 610.

As shown in FIG. 6, the S1G relays 620, 630 and 640 may each comprise a relay AP 603, a relay STA 601, and a relay function 602. The relay STA 601 may communicate with an upper BSS 605. The relay AP 603 may communicate with a lower BSS 604. The relay function 602 may perform local reception or selective forwarding of MSDUs between the relay STA 601 and the relay AP 603, for example, based on destination address. For example, the relays 620 and 630 may be associated with the root AP 610. The Relay 640 may be associated with the relay 620. For example, the STA 650 may be associated with the relay 620. The STAs 660 and 670 may be associated with the relay 640. The STAs 680 and 690 may be associated with relay 630.

Frames from the STA 650 may be forwarded via the relay function of relay 620 (e.g., from the relay AP to the relay STA of relay 620) to the root AP 610. In a reverse direction, frames from root AP 610 are forwarded to STA 650 via the relay function of relay 620 (e.g., from the relay STA to the relay AP of relay 620). For example, the STAs 680 and 690 may communicate with the root AP 610 via the relay 630 in both directions (e.g., uplink and downlink). On the other hand, STAs 660 and 670 may use the relays 640 and 620 consecutively to communicate with the root AP 610.

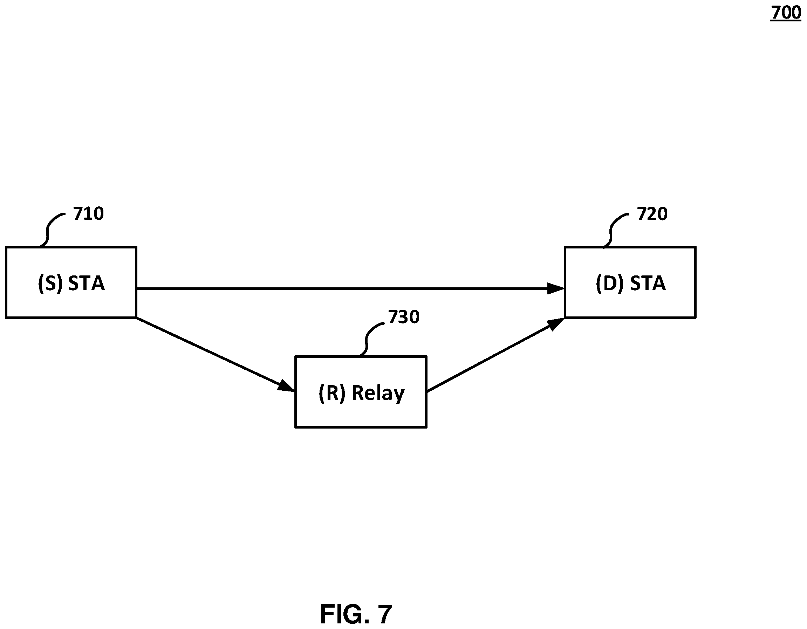

FIG. 7 shows an example of a source-relay-destination link. As shown in FIG. 7, a source-relay-destination link 700 may comprise a STA 710 as a source STA, a STA 720 as a destination STA, and a relay 730. STA 710 may be a non-AP STA or an AP STA. For example, STA 720 may be a non-AP STA or an AP STA. Relay 730 may comprise a relay AP, a relay STA, and a relay function as described in FIG. 6 above. For example, STA 710 may be an AP STA and STA 720 may be a non-AP STA, or vice versa. For example, STAs 710 and 720 both may be AP STAs or non-AP STAs. STAs 710 and 720 may communicate directly.

Source STA 710 may use relay 730 to communicate with a destination STA 720, for example, due to unreliable communication or to extend the range of existing communication. For example, STA 710 may send (e.g., transmit) data frames destined to STA 720 via relay 730. Source STA 710 and/or the relay 730 may select (or choose) to protect the sent (e.g., transmitted) data frames with TXOP protection while relaying the data frames via relay 730. For example, source STA 710 and/or relay 730 may select (or choose) not to protect the data frames with TXOP protection while relaying the data frames via relay 730.

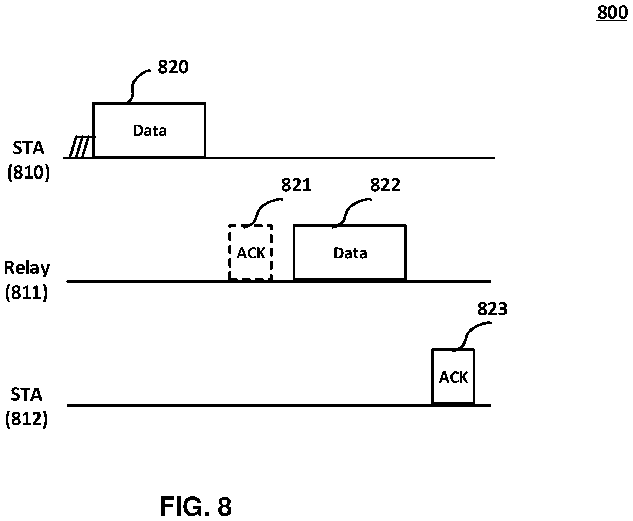

FIG. 8 shows an example of relaying without transmission opportunity (TXOP) protection. For example, an example 800 may be based on the TXOP sharing procedures for S1G relay operation as defined in section 10.54.5 of the IEEE 802.11 standard draft "IEEE P802.11-REVme^{™}/D2.1, January 2023." As shown in FIG. 8, the example 800 may include STAs 810 and 812 and relay 811.

STA 810 may be a STA that may support TXOP sharing procedures. As shown in FIG. 8, STA 810 may send (e.g., transmit) a data frame 820 that may be destined to STA 812 via relay 811. Data frame 820 may be a protocol version 1 (PV1) QoS data frame. For example, STA 810 may set a Relayed Frame field in a Frame Control field of data frame 820 to 1. The Relayed Frame field set to 1 may indicate a relay-shared TXOP. Based on receiving data frame 820 with the Relay Frame field set to 1, relay 811 may send (e.g., transmit) an ACK frame 821 if an explicit ACK procedure is used. Alternatively, relay 811 may not send (e.g., transmit) an ACK frame if an implicit ACK procedure is used.

Relay 811 may send (e.g., transmit) data frame 822 to STA 812 without protecting data frame 822. STA 812 may send (e.g., transmit) an ACK frame 823 after receiving data frame 822 from relay 811. Relaying without TXOP protection may allow a lower latency transmission of data frame 820 from STA 810 to STA 812. However, communication may be less reliable, for example, if other STAs of the same BSS may be present within the communication ranges of STAs 810, 812 and relay 811. To improve communication reliability, an RTS/CTS procedure may be used to protect relayed data frames as further described herein.

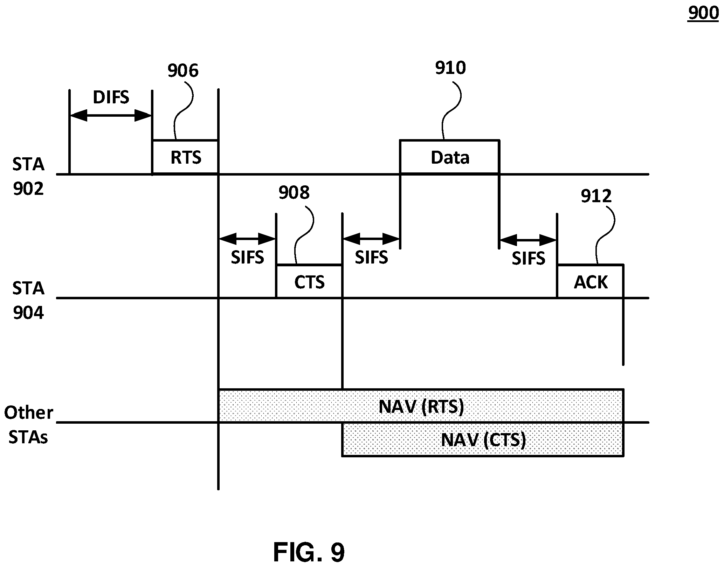

FIG. 9 shows an example of a Request-to-Send (RTS)/Clear-to-Send (CTS) procedure. An example RTS/CTS procedure 900 may be an example based on the RTS/CTS procedure as defined in section 10.3.2.9 of the IEEE 802.11 standard draft "IEEE P802.11-REVme^{™}/D2.1, January 2023" and/or any other release, version, and/or standard for wireless communications. As shown in FIG. 9, the example RTS/CTS procedure 900 may include STAs 902 and 904. Other STAs of the same BSS may also be within communication range of STAs 902 and 904.

STA 902 may send (e.g., transmit) an RTS frame 906 to STA 904. STA 902 may send (e.g., transmit) RTS frame 906 to protect, from hidden STA(s), the transmission of a data frame 910 that STA 902 may intend to send (e.g., transmit). RTS frame 906 may include a Duration/ID field. The Duration/ID field may be set to the time, in microseconds, required to send (e.g., transmit) data frame 910, plus one CTS frame, plus one ACK frame (if required), plus three SIFS (Short Interframe Spacing) periods.

STA 904 may respond to RTS frame 906 by sending (e.g., transmitting) a CTS frame 908 to STA 902. CTS frame 908 may be sent (e.g., transmitted) one SIFS period after RTS frame 906. STA 904 may respond to RTS frame 906 when RTS frame 906 is addressed to STA 904 and after considering the NAV, unless the NAV was set by a frame originating from STA 902. STA 904 may respond to the RTS frame 906 if RTS frame 906 is addressed to STA 904 and if the NAV indicates idle. For a non-S1G STA, the NAV may indicate idle if the NAV count is 0 or if the NAV count is non-zero but a nonbandwidth signaling TA obtained from a TA field of RTS frame 906 matches a saved TXOP holder address. For an S1G STA, the NAV may indicate idle if both the NAV and RID (response indication deferral) counters are 0 or if either the NAV or RID counter is non-zero but the TA field of RTS frame 906 matches the saved TXOP holder address.

STA 904 may set an RA field of CTS frame 908 to a nonbandwidth signaling TA obtained from the TA field of RTS frame 906. STA 904 may set a Duration field of CTS frame 908 based on the Duration/ID field of RTS frame 906, namely as equal to the value of the Duration/ID field of RTS frame 906, adjusted by subtracting the time required to send (e.g., transmit) CTS frame 908 and one SIFS period.

STA 902 may wait one SIFS period before sending (e.g., transmitting) data frame 910, for example, based on receiving CTS frame 908. STA 904 may send (e.g., transmit) an ACK frame 912, for example, based on (e.g., in response to) data frame 910. STA 904 may send (e.g., transmit) ACK frame 912 one SIFS after receiving data frame 910.

As shown in FIG. 9, other STAs within communication range of STAs 902 and 904, and belonging to the same BSS, may set their NAVs according to RTS frame 906 and/or CTS frame 908. For example, a STA receiving RTS frame 906 may set its NAV based on the Duration/ID field of RTS frame 906. Another STA receiving CTS frame 908 may set its NAV based on the Duration field of CTS frame 908. For example, the other STAs may not access the channel using EDCA until the end of transmission of ACK frame 912.

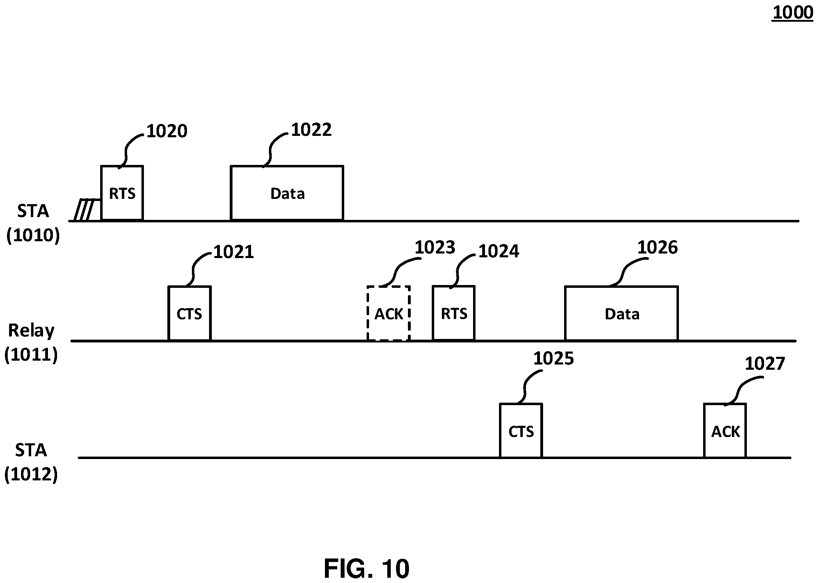

FIG. 10 shows an example of relaying with TXOP protection. For example, an example 1000 may be based on the TXOP sharing procedures for S1G relay operation as defined in section 10.54.5 of the IEEE 802.11 standard draft "IEEE P802.11-REVme^{™}/D2.1, January 2023" and/or any other release, version, and/or standard for wireless communications. As shown in FIG. 10, the example 1000 may include STAs 1010 and 1012 and relay 1011.

STA 1010 may be a STA that may support TXOP sharing procedures. STA 1010 may send (e.g., transmit) an RTS frame 1020 to relay 1011, for example, before sending (e.g., transmitting) a data frame 1022 to relay 1011. Relay 1011 may respond to RTS frame 1020 by sending (e.g., transmitting) a CTS frame 1021 to STA 1010, if its NAV indicates idle. STA 1010 may send (e.g., transmit) data frame 1022 to relay 1011, for example, based on receiving CTS frame 1021. Relay 1011 may send (e.g., transmit) an ACK frame 1023 if an explicit ACK procedure is used. Alternatively, relay 1011 may not send (e.g., transmit) an ACK frame if an implicit ACK procedure is used.

Relay 1011 may send (e.g., transmit) an RTS frame 1024 to STA 1012, for example, before relaying receive data frame 1022 onto STA 1012. STA 1012 may respond to RTS frame 1024 by sending (e.g., transmitting) a CTS frame 1025 to relay 1011, if its NAV indicates idle. Upon receiving CTS frame 1025, relay 1011 may send (e.g., transmit) a data frame 1026 (relay of data frame 1022) to STA 1012. STA 1012 may send (e.g., transmit) an ACK frame 1027 to relay 1011 after receiving data frame 1026.

Relaying with TXOP protection may provide a more reliable approach to send (e.g., transmit) data frames from a source STA to a destination STA. This may be achieved by using the RTS/CTS procedure sequentially in source-to-relay and relay-to-destination links. However, there may be a delay until the relay receives a CTS frame from the destination STA and may send (e.g., transmit) the data frame to the destination STA, for example, if the relay-to-destination link is not available due to a busy medium. An end-to-end approach that provides TXOP protection for both links may thus be more suitable to prevent any such delays.

In at least some wireless communications (e.g., a Wi-Fi standard), a triggered TXOP sharing (TXS) procedure may allow an AP to allocate a portion of the time within an obtained TXOP to a station for sending (e.g., transmitting) one or more non-trigger-based (non-TB) PPDUs. For the triggered TXOP sharing procedure, the AP may send (e.g., transmit) a multi-user request-to-send (MU-RTS) trigger frame with a triggered TXOP sharing mode subfield set to a non-zero value. The MU-RTS trigger frame is a trigger frame for triggering CTS frame(s) from multiple users.

An MU-RTS TXS (triggered TXOP sharing) trigger (MRTT) frame may comprise a MU-RTS trigger frame with a triggered TXOP sharing mode subfield set to a non-zero value (e.g., 1 or 2). During the portion of the allocated time, the station may send (e.g., transmit) the one or more non-TB PPDUs to the AP. For example, a triggered TXOP sharing mode subfield in an MU-RTS TXS trigger frame may be set to 1.

During the portion of the allocated time, the station may send (e.g., transmit) the one or more non-TB PPDUs to the AP or a peer station. The peer station may be a station with a connection for peer-to-peer (P2P) communication or direct communication with the station. For example, a triggered TXOP sharing mode subfield in a MU-RTS TXS trigger frame may be set to 2. The direct wireless link may be established, for example, based on the tunneled direct link setup (TDLS) protocol.

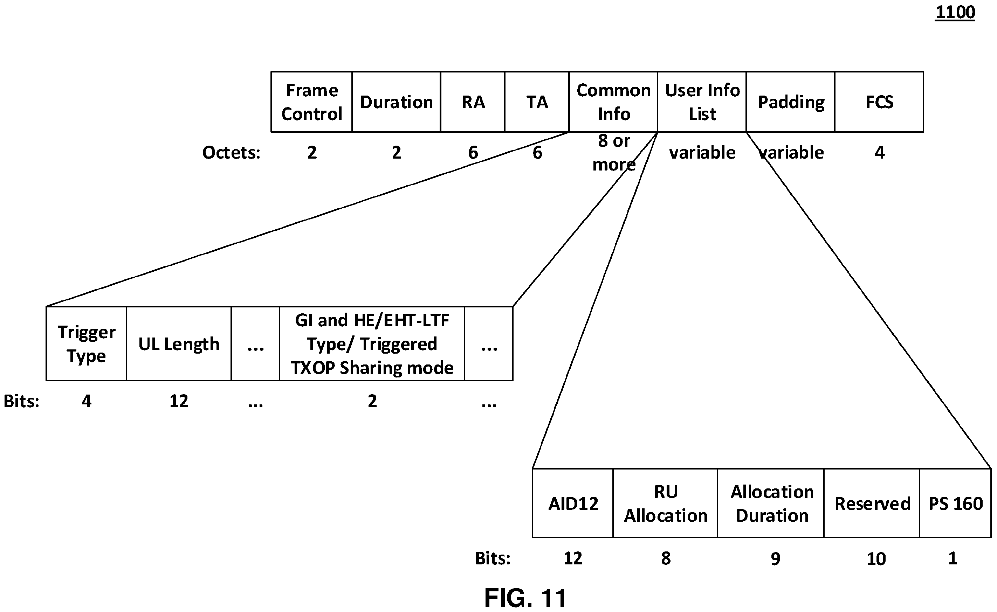

FIG. 11 shows an example of a MU-RTS trigger frame. The MU-RTS trigger frame may be used in a TXS procedure. For example, the MU-RT S trigger frame may comprise a frame control field, a duration field, a receiver address (RA) field, a transmitter address (TA) field, a common info field, a user info list field, a padding field, and/or frame check sequence (FCS) field. For example, the common info field may be a high-efficiency (HE) variant common info field, an extremely high throughput (EHT) variant common info field, or an ultra-high reliability (UHR) variant common info field.

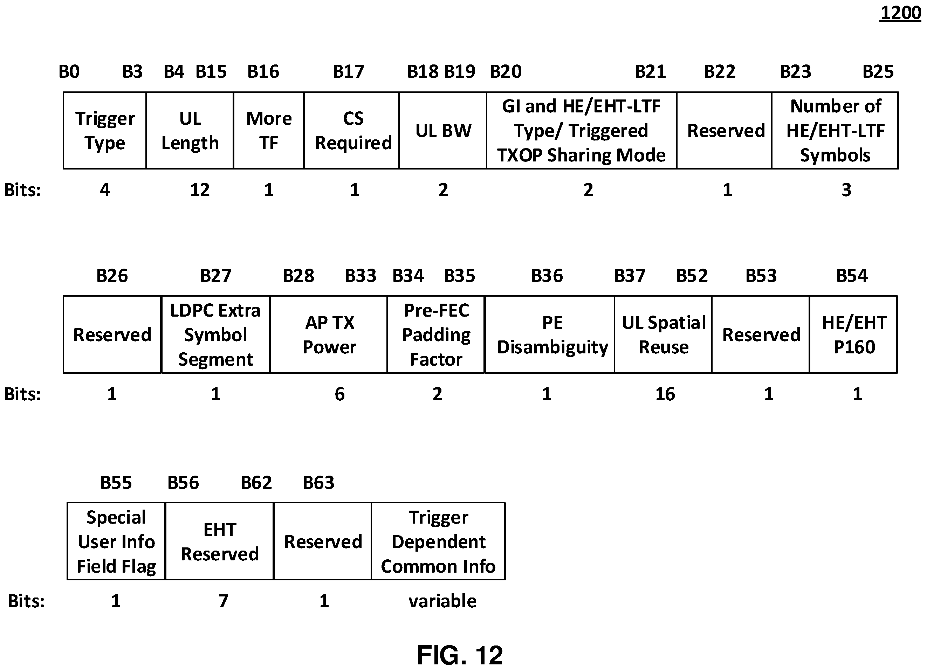

An EHT variant common info field may comprise one or more of the following subfields: trigger type, UL length, more TF, CS required, UL BW, GI and HE/EHT-LTF Type/Triggered TXOP sharing mode, number of HE/EHT-LTF symbols, LDPC extra symbol segment, AP Tx Power, Pre-FEC padding factor, PE disambiguity, UL spatial reuse, HE/EHT P160, special user info field flag, EHT reserved, reserved, or trigger dependent common info. The subfields of the EHT variant common info field may be presented in more detail in FIG. 12.

An EHT variant user info field may comprise one or more of the following subfields: AID12, RU allocation, allocation duration, reserved, or PS160. For example, the AID12 subfield of the MU-RTS trigger frame may indicate an association identifier (AID) of a STA that may use a time indicated by an allocation duration subfield of the MU-RTS trigger frame. For example, the RU allocation subfield of the MU-RTS trigger frame may indicate the location and size of the RU allocated for a STA indicated by an AID12 subfield, which may be used together with the PS160 subfield. For example, the allocation duration subfield may include an allocation duration subfield (e.g., if the triggered TXOP sharing mode subfield is set to a non-zero value). The allocation duration subfield may indicate a time allocated by an AP sending (e.g., transmitting) the MU-RTS trigger frame. The allocated time may be a portion of the time of an obtained TXOP by the AP. The allocation duration subfield may indicate a first time period.

FIG. 12 shows an example of a common info field of an MRTT frame. The MRTT frame may be used in a TXS procedure. The MRTT frame may be sent (e.g., transmitted) by an AP to associated STAs.

An EHT variant common info field may comprise one or more of the following subfields: trigger type, UL length, more TF, CS required, UL BW, GI and HE/EHT-LTF Type/Triggered TXOP sharing mode, number of HE/EHT-LTF symbols, LDPC extra symbol segment, AP Tx Power, Pre-FEC padding factor, PE disambiguity, UL spatial reuse, HE/EHT P160, special user info field flag, EHT reserved, reserved, or trigger dependent common info. For example, the trigger type subfield may indicate an MU-RTS trigger frame. For example, the GI and HE/EHT-LTF Type/Triggered TXOP sharing mode subfield may include a triggered TXOP sharing mode subfield (e.g., when the trigger type subfield indicates a MU-RTS trigger frame). For example, the triggered TXOP sharing mode subfield may be set to a non-zero value (e.g., 1 or 2).

The triggered TXOP sharing mode subfield may indicate that a STA indicated by an AID12 subfield (of the user info list field) of the MU-RTS trigger frame may send (e.g., transmit) one or more non-TB PPDUs to the AP during the time indicated by the allocation duration subfield. In this case, the triggered TXOP sharing mode subfield may be set to 1. For example, the triggered TXOP sharing mode subfield may indicate that a STA indicated by an AID12 subfield of the MU-RTS trigger frame may send (e.g., transmit) one or more non-TB PPDUs to the AP or to a peer STA during the time indicated by the allocation duration subfield. The peer STA may be a STA with a connection for P2P communication or direct communication with the STA. In this case, the triggered TXOP sharing mode subfield may be set to 2.

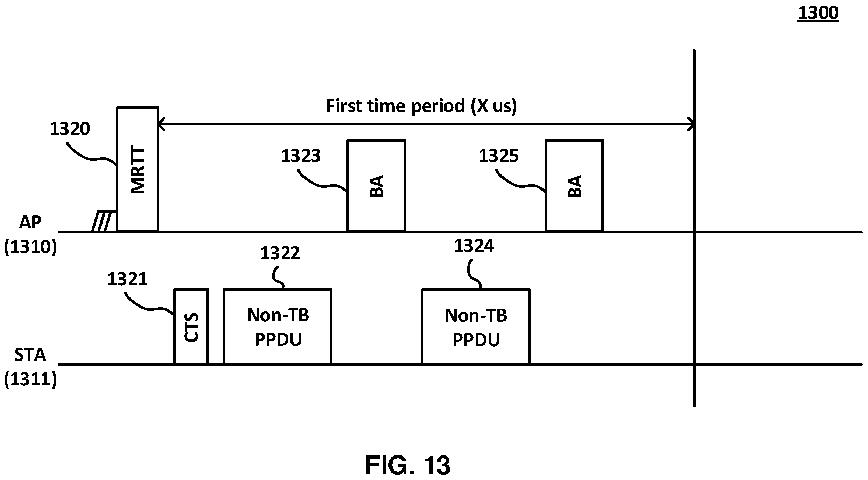

FIG. 13 shows an example of a TXS procedure (e.g., Mode =1). As shown in FIG. 13, the TXS procedure may begin by an AP 1310 sending (e.g., transmitting) a MU-RTS TXS trigger (MRTT) frame 1320 to a STA 1311. MRTT frame 1320 may allocate a portion of an obtained TXOP to STA 1311 and may indicate a triggered TXOP sharing mode equal to 1. STA 1311 receiving MRTT 1320 may use the allocated time duration to send (e.g., transmit) one or more non-TB PPDUs 1322, 1324 to AP 1310. For example, MRTT frame 1320 may comprise a triggered TXOP sharing mode subfield and/or a first time period. For example, the first time period may indicate a portion of a time allocated by AP 1310 within an obtained TXOP. For example, the first time period may be indicated by a subfield in MRTT frame 1320. For example, the first time period may be set to a value of X microseconds (us).

The triggered TXOP sharing mode subfield may be set to 1. The triggered TXOP sharing mode subfield set to 1 may indicate that STA 1311 may send (e.g., transmit) one or more non-TB PPDUs to AP 1310 during the first time period. The one or more non-TB PPDUs may comprise a data frame, a control frame, a management frame, or an action frame. For example, as shown in FIG. 13, MRTT frame 1320 may define a first time period of X us. STA 1311 may send (e.g., transmit) non-TB PPDUs 1322, 1324 comprising one or more data frame to AP 1310 during the first time period, preceded by a CTS frame 1321. For example, AP 1310 may send (e.g., transmit) one or more Block Ack (BA) frames 1323, 1325 based on (e.g., in response to) the one or more data frames contained in non-TB PPDUs 1322, 1324 received from STA 1311.

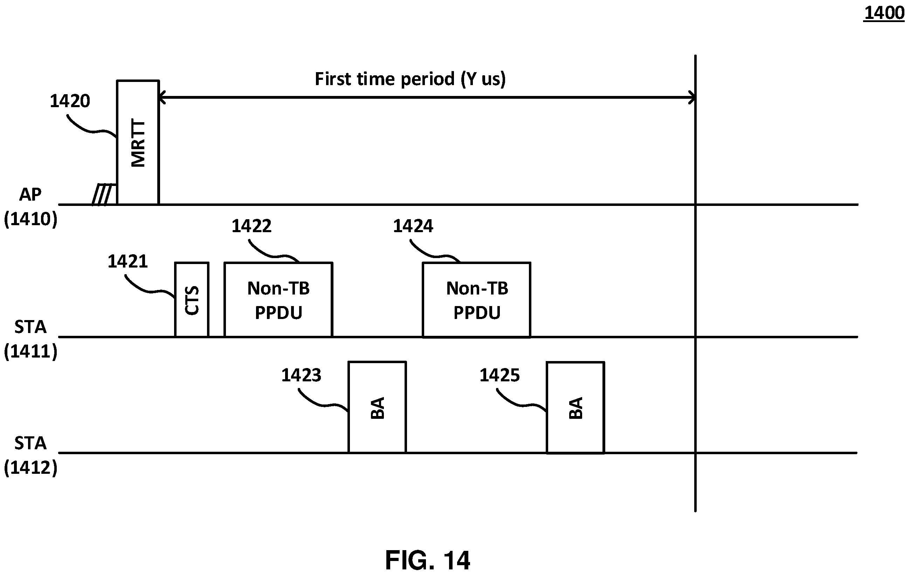

FIG. 14 shows an example of a TXS procedure (e.g., Mode =2). As shown in FIG. 14, the procedure may begin by an AP 1410 sending (e.g., transmitting) an MRTT frame 1420 to a STA 1411. MRTT frame 1420 may allocate a portion of an obtained TXOP to STA 1411 and may indicate a triggered TXOP sharing mode equal to 2. STA 1411 receiving MRTT 1420 may use the allocated time duration to send (e.g., transmit) one or more non-TB PPDUs 1422, 1424 to STA 1412. For example, MRTT frame 1420 may comprise a triggered TXOP sharing mode subfield and/or a first time period.

The first time period may indicate a portion of a time allocated by AP 1410 within an obtained TXOP. For example, the first time period may be indicated by a subfield in MRTT frame 1420. For example, the first time period may be set to a value of Y us. For example, the triggered TXOP sharing mode subfield may be set to 2. The triggered TXOP sharing mode subfield set to 2 may indicate that STA 1411 may send (e.g., transmit) one or more non-TB PPDUs to AP 1410 or to a peer STA during the first time period. For example, the peer STA may be a STA with a connection for P2P communication or direct communication with STA 1411. The one or more non-TB PPDUs may comprise a data frame, a control frame, a management frame, or an action frame.

As shown in FIG. 14, MRTT frame 1420 may define a first time period of Y us. STA 1411 may send (e.g., transmit) non-TB PPDUs 1422, 1424 comprising one or more data frame to STA 1412 during the first time period, preceded by a CTS frame 1421. For example, STA 1412 may send (e.g., transmit) one or more Block Ack (BA) frames 1423, 1425, for example, based on (e.g., in response to) the one or more data frames contained in non-TB PPDUs 1422, 1424 received from the STA 1411.

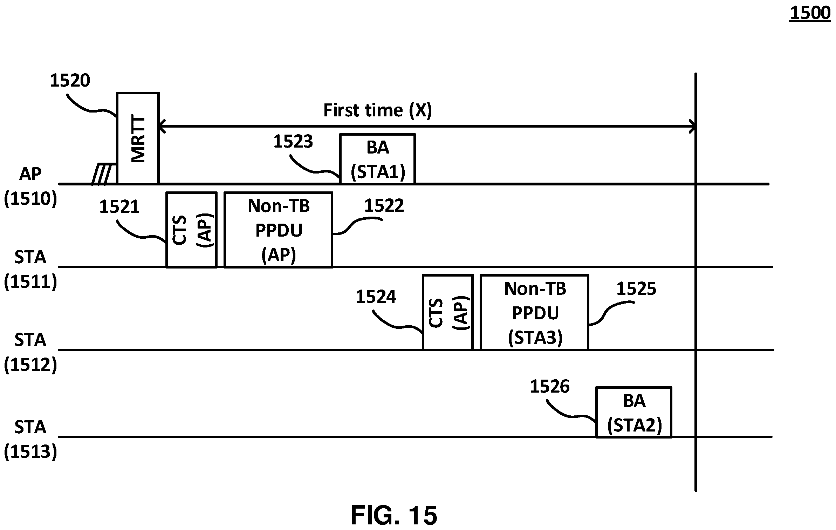

FIG. 15 shows an example of a TXS procedure for allocating time within an obtained TXOP to multiple STAs, with a respective triggered TXOP sharing mode indicated for each STA. For example, an example 1500 may include an AP 1510 and a plurality of STAs 1511, 1512, and 1513. For example, STAs 1511 and 1512 may be associated with AP 1510, while STA 1513 may not be associated with AP 1510.

As shown in FIG. 15, the procedure may begin by AP 1510 sending (e.g., transmitting) MRTT frame 1520. MRTT frame 1520 may allocate a time portion of an obtained TXOP to STAs 1511 and 1512 respectively. For example, MRTT frame 1520 may indicate a respective triggered TXOP sharing mode for each of STAs 1511 and 1512. For example, MRTT frame 1520 may comprise a common info field. For example, MRTT frame 1520 may comprise a plurality of user info fields corresponding to a plurality of STAs, including STAs 1511 and 1512. For example, the plurality of user info fields may each include a triggered TXOP sharing mode subfield. A triggered TXOP sharing mode subfield of a user info field may indicate a TXS operation mode of a respective STA. The respective STA may be indicated by an AID 12 subfield of the user info field.

A triggered TXOP sharing mode subfield of a user info field corresponding to STA 1511 may be set to 1 to indicate a Triggered TXOP sharing mode 1 for STA 1511, while a triggered TXOP sharing mode subfield of a user info field corresponding to STA 1512 may be set to 2 to indicate a Triggered TXOP sharing mode 2 for STA 1512. For example, the indication of a triggered TXOP sharing mode 1 for a STA in a MU-RTS TXS trigger frame may indicate that the STA may send (e.g., transmit) a non-TB PPDU to an AP sending (e.g., transmitting) the MU-RTS TXS trigger frame, in a time allocation for the STA. The STA for which the triggered TXOP sharing mode is indicated in the MU-RTS TXS trigger frame may be indicated by an AID12 subfield of a user info field of the MU-RTS TXS trigger frame.

The indication of a triggered TXOP sharing mode 2 for a STA in a MU-RTS TXS trigger frame may indicate that the STA may send (e.g., transmit) a non-TB PPDU to an AP sending (e.g., transmitting) the MU-RTS TXS trigger frame or to another STA, in a time allocation for the STA. The STA for which the triggered TXOP sharing mode is indicated in the MU-RTS TXS trigger frame may be indicated by an AID12 subfield of a user info field of the MU-RTS trigger frame. The other STA may be a peer STA that has a direct connection with the STA indicated by the AID12 subfield.

As shown in FIG. 15, STA 1511 may send (e.g., transmit) a CTS frame 1521, followed by a non-TB PPDU 1522, in a respective time allocation for STA 1511, for example, based on (e.g., in response to) MRTT frame 1520. For example, STA 1512 may send (e.g., transmit) a CTS frame 1524, followed by a non-TB PPDU 1525, in a respective time allocation for STA 1512.

STA 1511 may send (e.g., transmit) non-TB PPDU 1522 to AP 1510, for example, based on a triggered TXOP sharing mode subfield, of a user info field corresponding to STA 1511, being set to 1. For example, STA 1511 may receive a Block Ack (BA) frame 1523, based on (e.g., in response to) non-TB PPDU 1522, from AP 1510. For example, STA 1512 may send (e.g., transmit) non-TB PPDU 1525 to STA 1513 based on a triggered TXOP sharing mode subfield, of a user info field corresponding to STA 1512, being set to 2. For example, STA 1512 may receive a Block Ack (BA) frame 1526, based on (e.g., in response to) non-TB PPDU 1525, from STA 1513.

As shown in FIG. 15, allocating a time portion of an obtained TXOP to STAs 1511 and 1512 may not be adequate to guarantee end-to-end TXOP protection for a relay operation. STA 1512 may send (e.g., transmit) a non-TB PPDU to any STA it has buffered traffic to, instead of to a predetermined relay or a destination STA, for example, for example, if a TXS mode subfield of a user info field corresponding to STA 1512 is set to 2. For example, the TXS procedure shown in the example 1500 may not be used for a relaying procedure. For example, a multi-user TXS procedure may be used to enable TXS-based relaying procedures.

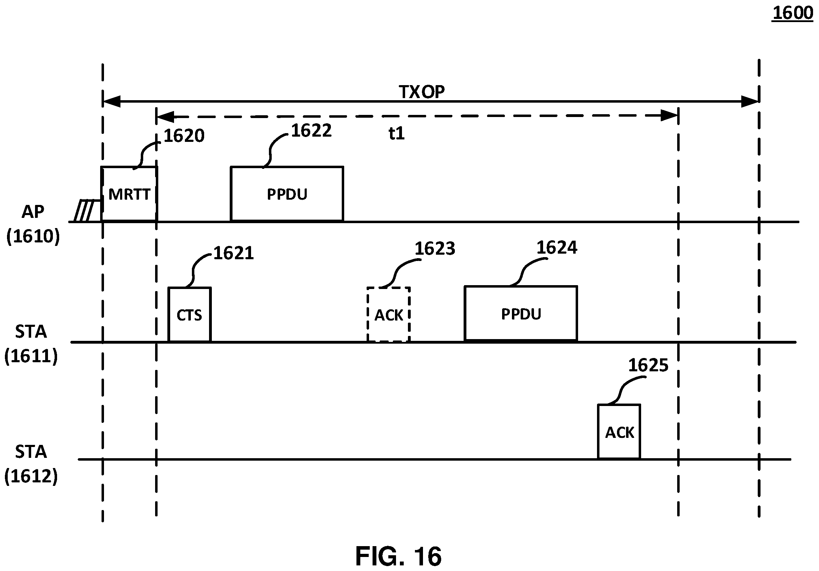

FIG. 16 shows an example of a TXS-based relaying procedure. For example, the TXS-based relaying procedure may be used for relaying downlink traffic from an AP to a STA. As shown in FIG. 16, an example 1600 may include an AP 1610 and a plurality of STAs 1611 and 1612. STAs 1611 and 1612 may be associated with AP 1610. For example, AP 1610 and STAs 1611 and 1612 may be within communication range of each other. For example, STA 1611 may receive data frames from AP 1610 destined to itself. For example, STA 1611 may serve as a relay for STA 1612. For example, AP 1610 may prefer to send (e.g., transmit) a PPDU to STA 1612 via STA 1611 in order to increase the throughput in a downlink transmission. For example, AP 1610 may prefer to receive a PPDU from STA 1612 via STA 1611 in order to increase the throughput in an uplink transmission.

As shown in FIG. 16, the TXS-based relaying procedure may begin by AP 1610 sending (e.g., transmitting) an MRTT frame 1620. MRTT frame 1620 may allocate a time portion of an obtained TXOP to STA 1611. For example, MRTT frame 1620 may indicate a triggered TXOP sharing mode for STA 1611. For example, the triggered TXOP sharing mode may be set to 3. For example, the triggered TXOP sharing mode being equal to 3 may indicate to STA 1611 that the allocated time portion is to be used for a relaying operation. For example, MRTT frame 1620 may comprise a common info field. For example, the common info field may comprise the triggered TXOP sharing mode. For example, MRTT frame 1620 may comprise a user info field corresponding to STA 1611. STA 1611 may be indicated by an AID12 subfield of the user info field. For example, the whole duration of the relaying operation may be indicated in an allocation duration field of the user info field.

The indication of a triggered TXOP sharing mode 3 for a STA in a MU-RTS TXS trigger frame may indicate that the STA may serve as a relay between the AP and another STA. STA 1611 may send (e.g., transmit) a CTS frame and may receive a PPDU from the AP to be sent (e.g., transmitted) to STA 1612 in response, for example, after receiving the MRTT frame. For example, the TXS mode may be 3 and STA 1611 may be indicated by an AID12 subfield of the user info field. The address of a destination STA, e.g., STA 1612, may be indicated in the PHY header or MAC header of the PPDU. For example, STA 1611 may act as a relay for downlink transmission.

STA 1611 may send (e.g., transmit) a CTS frame 1621, for example, based on (e.g., in response to) MRTT frame 1620. AP 1610 may send (e.g., transmit) a PPDU 1622 to STA 1611, for example, after receiving CTS frame 1621. STA 1611 may send (e.g., transmit) an ACK frame 1623 to AP 1610, for example, based on receiving PPDU 1622. For example, STA 1611 may not send (e.g., transmit) an ACK frame if an implicit ACK procedure is used. STA 1611 may then send (e.g., transmit) a PPDU 1624 to STA 1612. PPDU 1624 may be based on PPDU 1622. The data payload of PPDU 1624 may be the same as the data payload of PPDU 1622. STA 1611 may receive an ACK frame 1625 from STA 1612, for example, based on (e.g., in response to) PPDU 1624. For example, ACK frames 1623 and 1625 may be block ACK (BA) frames. For example, as shown in FIG. 16, the time portion of the TXOP allocated to STA 1611 may correspond to the end-to-end duration of the relaying operation. For example, STA 1611 may use the allocated time portion to receive PPDU 1622 from AP 1610 and to send (e.g., transmit) PPDU 1624 to STA 1612. The TXS-based relaying procedure of FIG. 16 may only be used for a two-hop relaying operation (e.g., with a single relay node in the end-to-end path) and may not be used for relaying operations with greater than two hops (e.g., with more than one relay node in the end-to-end path), for example, as MRTT frame 1620 may allocate only STA 1611.

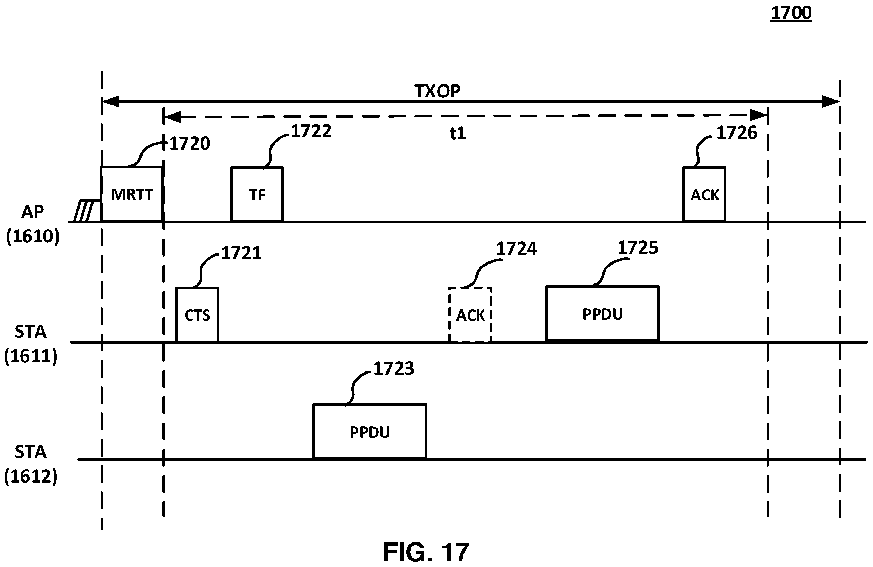

FIG. 17 shows an example of a TXS-based relaying procedure. The TXS-based relaying procedure may be used for relaying uplink traffic from a STA to an AP. As shown in FIG. 17, an example 1700 may include an AP 1610 and a plurality of STAs 1611 and 1612. For example, STAs 1611 and 1612 may be associated with AP 1610. For example, AP 1610 and STAs 1611 and 1612 may be within communication range of each other. STA 1611 may receive data frames from AP 1610 destined to itself. For example, STA 1611 may serve as a relay for STA 1612. AP 1610 may prefer to send (e.g., transmit) a PPDU to STA 1612 via STA 1611 in order to increase the throughput in a downlink transmission. For example, AP 1610 may prefer to receive a PPDU from STA 1612 via STA 1611 in order to increase the throughput in an uplink transmission.

As shown in FIG. 17, the TXS-based relaying procedure may begin by AP 1610 sending (e.g., transmitting) an MRTT frame 1720. MRTT frame 1720 may allocate a time portion of an obtained TXOP to STA 1611. MRTT frame 1720 may indicate a triggered TXOP sharing mode for STA 1611. The triggered TXOP sharing mode may be set to 3. The triggered TXOP sharing mode being equal to 3 may indicate to STA 1611 that the allocated time portion is to be used for a relaying operation. For example, MRTT frame 1720 may comprise a common info field. The common info field may comprise the triggered TXOP sharing mode. For example, MRTT frame 1720 may comprise a user info field corresponding to STA 1611. STA 1611 may be indicated by an AID12 subfield of the user info field. The whole duration of the relaying operation may be indicated in an allocation duration field of the user info field.

The indication of a triggered TXOP sharing mode 3 for a STA in an MU-RTS TXS trigger frame may indicate that the STA may serve as a relay between the AP and another STA. STA 1611 may send (e.g., transmit) a CTS frame, for example, after receiving the MRTT frame. For example, the TXS mode may be 3 and STA 1611 may be indicated by an AID 12 subfield of the user info field. STAs 1611 and 1612 may receive from the AP a trigger frame (TF) initiating uplink transmission from STA 1612 to the AP via STA 1611. The address of a source STA, e.g., STA 1612, may be indicated in the TF. In such a case, STA 1611 acts as a relay for uplink transmission.

STA 1611 may send (e.g., transmit) a CTS frame 1721, for example, based on (e.g., in response to) MRTT frame 1720. AP 1610 may send (e.g., transmit) a TF 1722 to STAs 1611 and 1612 to initiate uplink transmission from STA 1612 to the AP via STA 1611, for example, after receiving CTS frame 1721. STA 1612 may send (e.g., transmit) PPDU 1723 to STA 1611, for example, based on receiving TF 1722. STA 1611 may send (e.g., transmit) an ACK frame 1724 to STA 1612, for example, based on (e.g., in response to) PPDU 1723. For example, STA 1611 may not send (e.g., transmit) an ACK frame if an implicit ACK procedure is used. STA 1611 may then send (e.g., transmit) a PPDU 1725 to AP 1610. PPDU 1725 may be based on PPDU 1723. The data payload of PPDU 1725 may be the same as the data payload of PPDU 1723. STA 1611 may receive an ACK frame 1726 from AP 1610, for example, based on (e.g., in response to) PPDU 1725. ACK frames 1724 and 1726 may be block ACK (BA) frames.

As shown in FIG. 17, an additional trigger frame (trigger frame 1722) may be needed to trigger STA 1612 to send (e.g., transmit) PPDU 1723, for example, as MRTT frame 1720 allocates STA 1611 only. This may increase the overhead of the relaying procedure. Additionally or alternatively, the time portion of the TXOP allocated to STA 1611 may correspond to the end-to-end duration of the relaying operation. For example, STA 1611 may use the allocated time portion to receive PPDU 1723 from STA 1612 and to send (e.g., transmit) PPDU 1725 to AP 1610. The TXS-based relaying procedure of FIG. 17 may only be used for a two-hop relaying operation (e.g., with a single relay node in the end-to-end path) and may not be used for relaying operations with greater than two hops (e.g., with more than one relay node in the end-to-end path), for example, as MRTT frame 1720 may allocate only STA 1611.

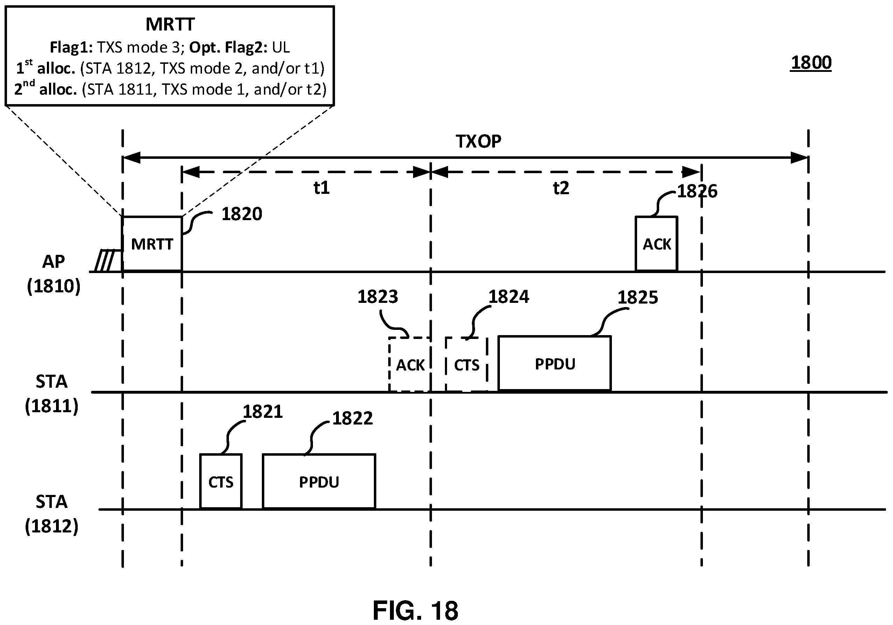

FIG. 18 shows an example of a TXS-based relaying procedure. The TXS-based relaying procedure may be used for relaying uplink traffic from a STA to an AP. As shown in FIG. 18, an example 1800 may include an AP 1810 and a plurality of STAs 1811 and 1812. For example, STAs 1811 and 1812 may be associated with AP 1810. For example, AP 1810, and STAs 1811 and 1812 may be within communication range of each other. For example, STA 1811 may receive data frames from AP 1810 destined to itself. For example, STA 1811 may serve as a relay for STA 1812. AP 1810 may prefer to send (e.g., transmit) a PPDU to STA 1812 via STA 1811 in order to increase the throughput in a downlink transmission. AP 1810 may prefer to receive a PPDU from STA 1812 via STA 1811 in order to increase the throughput in an uplink transmission.

As shown in FIG. 18, the TXS-based relaying procedure may begin with AP 1810 sending (e.g., transmitting) an MRTT frame 1820 after obtaining a TXOP. For example, MRTT frame 1820 may comprise a plurality of allocations for a plurality of respective STAs. An allocation of MRTT frame 1820 may comprise an identifier of a STA, a time period (of the TXOP) allocated to the STA, and/or a TXS mode for the allocated time period. MRTT frame 1820 may comprise a first allocation for STA 1811 and/or a second allocation for STA 1812. The first allocation may comprise a first time period (e.g., t2 as shown in FIG. 18) of the TXOP. The second allocation may comprise a second time period (e.g., t1 as shown in FIG. 18) of the TXOP. For example, MRTT frame 1820 may further comprise a first indication that the first time period and/or the second time period may be for a transmission between the AP and STA 1812 via STA 1811 (e.g., a relay transmission).

The plurality of allocations of MRTT frame 1820 may be provided in a user info field list comprising a plurality of user info fields. Each user info field corresponds to a respective allocation and to a respective STA of the allocated STAs. For example, MRTT frame 1820 may comprise a first user info field comprising the first allocation for STA 1811 and a second user info field comprising the second allocation for STA 1812. The first time period may be indicated in an allocation duration subfield of the first user info field. The second time period may be indicated in an allocation duration subfield of the second user info field.

The order of the user info fields in the user info field list corresponds to the order in time of the allocated time periods. The first user info field comprising the first allocation comprising the first period may follow, in the user info field list, the second user info field comprising the second allocation comprising the second time period, for example, as shown in FIG. 18, where the first time period (t2) follows the second time period (t1) in time. For example, the first time period may be a short inter-frame space (SIFS) after the second time period.

An allocation of MRTT frame 1820 may include a TXS mode for the STA corresponding to the allocation. TXS mode may be set to 1 for transmission to the AP or may be set to 2 for transmission to a STA, for example, if TXS mode is present in the user info field. For example, the first indication may be provided in a TXS mode subfield of MRTT frame 1820. For example, the TXS mode subfield may be provided in a common info field of MRTT frame 1820. the TXS mode subfield may be set to 3. The TXS mode being equal to 3 may indicate to STAs 1811 and 1812 that the allocated time portions are to be used for a relaying operation.

MRTT frame 1820 may further comprise a second indication of whether the transmission between AP 1810 and STA 1812 is an uplink transmission or a downlink transmission. The first user info field comprising the first time period may precede, in the user info field list in MRTT frame 1820, the second user info field comprising the second time period, for example, if the second indication indicates that the transmission is a downlink transmission. The first user info field comprising the first time period may follow, in the user info field list in MRTT frame 1820, the second user info field comprising the second time period, for example, if the second indication indicates that the transmission is an uplink transmission. For example, MRTT frame 1820 may not comprise a second indication of whether the transmission between AP 1810 and STA 1812 is an uplink transmission or a downlink transmission. The second indication may be provided in the common info field of MRTT frame 1820, for example, if MRTT frame 1820 comprises the second indication. The second indication may be provided in one of the reserved bits (e.g., B22, B26, B53 or B63) of the common info field as shown in FIG. 12.

STA 1812 may determine that it is being triggered by MRTT frame 1820 to send (e.g., transmit) an uplink frame to AP 1810 via STA 1811 during the second time period (t1), for example, based on receiving MRTT frame 1820. STA 1812 may make this determination, for example, based on the first indication, the second indication, and/or the order of the first user info field and the second user info field in the user info field list of MRTT frame 1820. STA 1812 may determine that it is to initiate an uplink frame transmission to AP 1810, for example, based on the second indication and the presence of its AID12 address in the first occurring user info field in the user info field list of MRTT frame 1820 (the second user info field). STA 1812 may determine that the uplink frame transmission is to be relayed via STA 1811, for example, based on the first indication and the presence of the AID 12 address of STA 1811 in the second occurring user info field in the user info field list (the first user info field).

STA 1812 may send (e.g., transmit) a CTS frame 1821, for example, based on (e.g., in response to) MRTT frame 1820. STA 1812 may proceed to send (e.g., transmit) a PPDU 1822 to STA 1811 during the second time period (t1). STA 1811 may send (e.g., transmit) an ACK frame 1823 to STA 1812, for example, based on (e.g., in response to) PPDU 1822. STA 1811 may not send (e.g., transmit) an ACK frame if an implicit ACK procedure is used.

STA 1811 may determine that it is to relay an uplink frame from STA 1812 to AP 1810, for example, based on receiving MRTT frame 1820. STA 1811 may make the determination based on the first indication, the second indication, and/or the order of the first user info field and the second user info field in the user info field list of MRTT frame 1820. STA 1811 may determine that it is to send (e.g., transmit) an uplink frame to AP 1810 during the first time period (t2), for example, based on the second indication and the presence of its AID12 address in the second occurring and last user info field in the user info field list of MRTT frame 1820 (the first user info field). STA 1811 may determine that the uplink frame is a relay frame to be received from STA 1812 during the second time period (t1), for example, based on the first indication and the presence of the AID 12 address of STA 1812 in the first occurring user info field in the user info field list (the second user info field).

STA 1811 may send (e.g., transmit) a CTS frame 1824 at the beginning of the first time period (t2) before send (e.g., transmitting a PPDU 1825 to AP 1810, for example, after receiving PPDU 1822 from STA 1812. STA 1811 may not send (e.g., transmit) a CTS frame before sending (e.g., transmitting) PPDU 1825 to AP 1810. The time period, t2, for this transmission may start with the transmission of ACK frame 1823. The time period, t2, for this transmission may start with the transmission of CTS frame 1824.

PPDU 1825 may be based on PPDU 1822. The data payload of PPDU 1825 may be the same as the data payload of PPDU 1822. STA 1811 may receive an ACK frame 1826 from AP 1810, for example, based on (e.g., in response to) PPDU 1825. ACK frames 1823 and 1826 may be block ACK (BA) frames.

As shown in FIG. 18, the TXS-based relaying procedure may eliminate the need for an additional trigger frame to trigger the start of the uplink transmission. This may be achieved by allocating a TXS time period, not only to the relay STA, but also to the source STA of the uplink transmission.

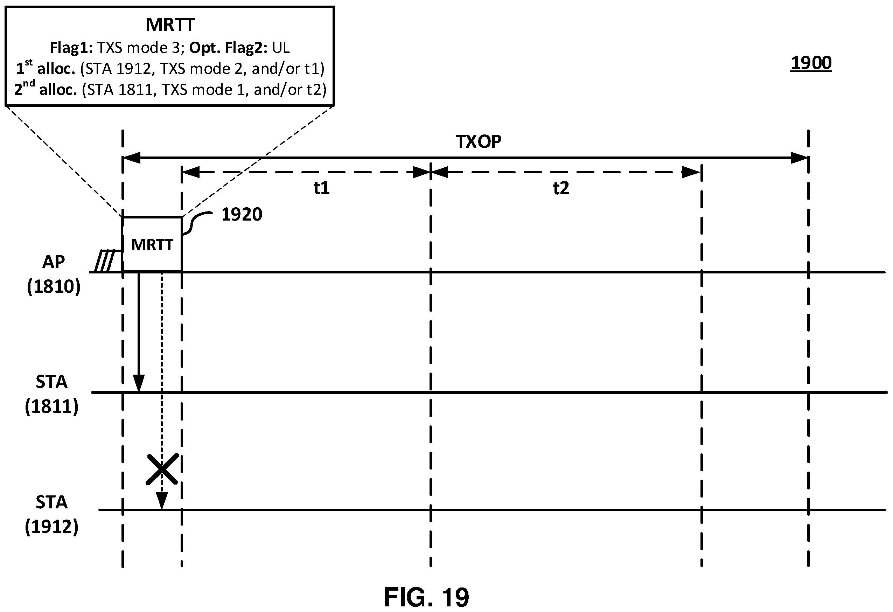

FIG. 19 shows an example problem in a TXS-based relaying procedure. As shown in FIG. 19, an example 1900 may include AP 1810, STA 1811, and STA 1912. For example, STAs 1811 and 1912 may be associated with AP 1810. In the example 1900, STA 1811 may be within the communication range of AP 1810 but that STA 1912 may be outside the communication range of AP 1810. STAs 1811 and 1912 may or may not be within each other's communication range. STA 1811 may receive data frames from AP 1810 destined to itself. STA 1811 may serve as a relay for STA 1912. AP 1810 may prefer to send (e.g., transmit) a PPDU to STA 1912 via STA 1811 in order to increase the throughput in a downlink transmission. For example, AP 1810 may prefer to receive a PPDU from STA 1912 via STA 1811 in order to increase the throughput in an uplink transmission.

As shown in FIG. 19, the TXS-based relaying procedure may begin with AP 1810 sending (e.g., transmitting) an MRTT frame 1920 after obtaining a TXOP. MRTT frame 1920 may be similar to MRTT frame 1820 described herein. The same description herein regarding to MRTT frame 1820 may apply to MRTT frame 1920.

As shown in FIG. 19, being outside the communication range of AP 1810, STA 1912 may not receive MRTT frame 1920. For example, MRTT frame 1920 may fail to trigger STA 1912 to send (e.g., transmit) an uplink frame to AP 1810 via STA 1811 during the second time period (t1). STA 1912 may not send (e.g., transmit) its buffered traffic to AP 1810 via STA 1811.

Being within the communication range of AP 1810, STA 1811 may receive MRTT frame 1920 and may determine that it is to relay an uplink frame from STA 1912 to AP 1810. For example, STA 1811 may determine that it is to send (e.g., transmit) an uplink frame to AP 1810 during the first time period (t2) and that the uplink frame is a relay frame to be received from STA 1912 during the second time period (t1). STA 1811 may not receive the uplink frame from STA 1912 during the second time period (t1) and may not be able to relay the uplink frame to AP 1810 during the first time period (t2), for example, as STA 1912 may not receive MRTT frame 1920 that triggers transmission of the uplink frame to STA 1811. Both the first allocation to STA 1912 and the second allocation to STA 1811 may be wasted.

In at least some wireless communications a relay station may be within the communication range of the access point, while a destination station may be outside the communication range of the access point. Since the destination station is outside the communication range of the access point, the destination station may not receive an MRTT frame, which may cause the MRTT frame to fail to trigger the destination station to send an uplink signal to the access point via the relay station. This problem may occur in any relaying system that may use a trigger frame for uplink transmission. Although the relay station, being within the access point's range, may receive the MRTT frame, the relay station may not relay the uplink signal to the access point because the relay station may not receive the uplink frame from the destination station.

As described herein, relay communications may be improved. For example, an access point may be able to communicate with a plurality of computing devices, such as stations, that may be located outside the communication range of the access point. An access point may send (e.g., transmit) a first frame comprising timing information for at least two computing devices. The timing information may comprise, for example, a first time period of a TXOP associated with a first computing device, a second time period of TXOP associated with a second computing device, and a first indication that the first computing device may send a second frame. The second frame may indicate that the second computing device may be associated with the second time period. The first computing device may send (e.g., transmit), to the second computing device, the second frame, allowing the second computing device to communicate with the access point during the second time period. For example, the first time period may be after the second time period. The first computing device may receive, from the second computing device, a third frame based on (e.g., in response to) the second frame, for example, during the second time period. The first computing device may send (e.g., transmit), to the access point, a fourth frame after receiving the third frame, for example, during the first time period. The fourth frame may be based on the third frame that the first computing device may have received from the second computing device, for example, during the second time period. The second computing device may successfully communicate with the access point via the first computing device, for example, even though the second computing device may be outside the communication range of the access point. By using a computing device as a relay device, an access point may be able to communicate with more computing devices that may be located outside its communication range, extending network coverage.

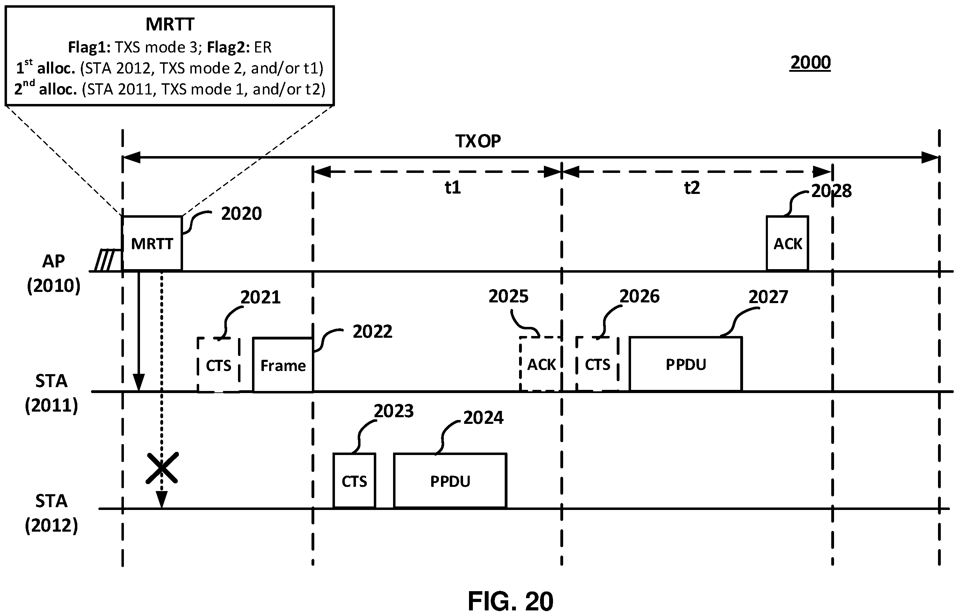

FIG. 20 shows an example of a TXS-based relaying procedure for relaying uplink traffic from a STA to an AP. As shown in FIG. 20, an example 2000 may include AP 2010, STA 2011, and STA 2012. For example, STAs 2011 and 2012 may be associated with AP 2010. STA 2011 may be within the communication range of AP 2010 but that STA 2012 may be outside the communication range of AP 2010. STAs 2011 and 2012 may or may not be within each other's communication range. For example, STA 2011 may receive data frames from AP 2010 destined to itself. For example, STA 2011 may serve as a relay for STA 2012. AP 2010 may prefer to send (e.g., transmit) a PPDU to STA 2012 via STA 2011 in order to increase the throughput in a downlink transmission. For example, AP 2010 may prefer to receive a PPDU from STA 2012 via STA 2011 in order to increase the throughput in an uplink transmission.

As shown in FIG. 20, the TXS-based relaying procedure may begin with AP 2010 sending (e.g., transmitting) an MRTT frame 2020 after obtaining a TXOP. MRTT frame 2020 may comprise a plurality of allocations for a plurality of respective STAs. An allocation of MRTT frame 2020 may comprise an identifier of a STA, a time period (of the TXOP) allocated to the STA, and/or a TXS mode for the allocated time period. MRTT frame 2020 may comprise a first allocation for STA 2011 and a second allocation for STA 2012. The first allocation may comprise a first time period (e.g., t2 as shown in FIG. 20) of the TXOP. The second allocation may comprise a second time period (e.g., t1 as shown in FIG. 20) of the TXOP.

MRTT frame 2020 may further comprise a first indication (e.g., Flag2 as shown in FIG. 20) of transmission, by STA 2011, of a frame that may indicate allocation of the second time period to STA 2012. For example, MRTT frame 2020 may indicate that STA 2011 is to send (e.g., transmit) a frame that repeats some of the information (e.g., the second allocation to STA 2012) contained in MRTT frame 2020. The first indication may comprise a request by AP 2010 to STA 2011 to send (e.g., transmit) the frame due to STA 2012 being outside the communication range of AP 2010. The first indication may comprise a request by AP 2010 to STA 2011 to send (e.g., transmit) the frame to extend the range of MRTT frame 2020. The first indication of transmission of the frame may be provided in a common info field of the MRTT frame. The first indication may be provided in one of the reserved bits (e.g., B22, B26, B53 or B63) of the common info field as shown in FIG. 12. MRTT frame 2020 may comprise a second indication (e.g., Flag1 as shown in FIG. 20) that the first time period and the second time period may be for a transmission between the AP and STA 2012 via STA 2011 (e.g., a relay transmission).

The plurality of allocations of MRTT frame 2020 may be provided in a user info field list comprising a plurality of user info fields. Each user info field corresponds to a respective allocation and to a respective STA of the allocated STAs. For example, MRTT frame 2020 may comprise a first user info field comprising the first allocation for STA 2011 and a second user info field comprising the second allocation for STA 2012. The first time period may be indicated in an allocation duration subfield of the first user info field. The second time period may be indicated in an allocation duration subfield of the second user info field.

The order of the user info fields in the user info field list corresponds to the order in time of the allocated time periods. For example, as shown in FIG. 20, where the first time period (t2) follows the second time period (t1) in time, the first user info field comprising the first allocation comprising the first period may follow, in the user info field list, the second user info field comprising the second allocation comprising the second time period. The first time period may be a short inter-frame space (SIFS) after the second time period.

An allocation of MRTT frame 2020 may include a TXS mode for the STA corresponding to the allocation. TXS mode may be set to 1 for transmission to the AP or may be set to 2 for transmission to a STA, for example, if TXS mode is present in the user info field. The second indication may be provided in a TXS mode subfield of MRTT frame 2020. The TXS mode subfield may be provided in a common info field of MRTT frame 2020. The TXS mode subfield may be set to 3. The TXS mode being equal to 3 may indicate to STAs 2011 and 2012 that the allocated time portions are to be used for a relaying operation.

MRTT frame 2020 may comprise a third indication (not shown in FIG. 20) of whether the transmission between AP 2010 and STA 2012 is an uplink transmission or a downlink transmission. The first user info field comprising the first time period may precede, in the user info field list in MRTT frame 2020, the second user info field comprising the second time period. For example, the third indication may indicate that the transmission is a downlink transmission. The first user info field comprising the first time period may follow, in the user info field list in MRTT frame 2020, the second user info field comprising the second time period. For example, the second indication may indicate that the transmission is an uplink transmission. MRTT frame 2020 may not comprise a third indication of whether the transmission between AP 2010 and STA 2012 is an uplink transmission or a downlink transmission. STA 2011 may determine whether the transmission between AP 2010 and STA 2012 is an uplink transmission or a downlink transmission, for example, based on the order of the user info fields in the user info field list and/or the individual TXS modes in the user info fields (if present). The third indication may be provided in the common info field of MRTT frame 2020, for example, if MRTT frame 2020 comprises the third indication. The third indication may be provided in one of the reserved bits (e.g., B22, B26, B53 or B63) of the common info field as shown in FIG. 12.

STA 2011 may determine that it is to relay an uplink frame from STA 2012 to AP 2010, and that it has to send a frame to STA 2012 to inform it of the relaying operation and the allocation of the second time period (t1) to STA 2012, for example, based on receiving MRTT frame 2020. STA 2011 may make this determination based on the first indication, the second indication, the third indication and/or the order of the first user info field and the second user info field in the user info field list of MRTT frame 2020. STA 2011 may determine that it has to send (e.g., transmit) a frame 2022 to STA 2012 to inform it of the relaying operation and the allocation of the second time period (t1) to STA 2012, for example, based on the first indication (e.g., Flag2 as shown in FIG. 20) and the second indication (e.g., Flag1 in FIG. 20). STA 2011 may determine that it is to send (e.g., transmit) an uplink frame to AP 2010 during the first time period (t2), for example, based on the third indication (not shown in FIG. 20) and the presence of its AID12 address in the second occurring and last user info field in the user info field list of MRTT frame 2020 (the first user info field). STA 2011 may determine that the uplink frame is a relay frame to be received from STA 2012 during the second time period (t1), for example, based on the second indication (e.g., Flag1 in FIG. 20) and the presence of the AID 12 address of STA 2012 in the first occurring user info field in the user info field list (the second user info field).

STA 2011 may send (e.g., transmit) a CTS frame 2021 to AP 2010 before sending (e.g., transmitting) frame 2022 to STA 2012, for example, after receiving MRTT frame 2020 from AP 2010. STA 2011 may not send (e.g., transmit) a CTS frame to AP 2010 before sending (e.g., transmitting) frame 2022 to STA 2012. Frame 2022 may comprise/indicate the second allocation to STA 2012 (contained in MRTT frame 2020) or the allocation of the second time period to STA 2012. Frame 2022 may comprise an MRTT frame. For example, frame 2022 may be identical to MRTT frame 2020. For example, STA 2011 may simply repeat MRTT frame 2020. The data content of frame 2022 may be the same as the data content of MRTT frame 2020. For example, STA 2011 may construct frame 2022 by copying the data content of MRTT frame 2020. Frame 2022 may comprise a request-to-send (RTS) frame or an extended control frame. The RTS frame or the extended control frame may comprise/indicate the second allocation to STA 2012 (contained in MRTT frame 2020) or the allocation of the second time period to STA 2012. The RTS or the extended control frame may further comprise an address of STA 2012 as a receiver address. The RTS frame or the extended control frame may further comprise an indication of a transmission between AP 2010 and STA 2012 via STA 2011 (indication of a relay transmission between AP 2010 and STA 2012).

STA 2012 may determine that it is being triggered by AP 2010 to send (e.g., transmit) an uplink frame to AP 2010 via STA 2011 during the second time period (t1), for example, based on receiving frame 2022 from STA 2011. Frame 2022 may be a repetition of MRTT frame 2020. Frame 2022 may comprises the same data content as MRTT frame 2020. STA 2012 may make the determination, for example, based on the first indication, the second indication, the third indication, and/or the order of the first user info field and the second user info field in the user info field list of frame 2022. STA 2012 may determine it is outside the communication range of AP 2010 for the relaying operation, for example, based on the first indication and receiving frame 2022 from STA 2011. STA 2012 may determine that it is to initiate an uplink frame transmission to AP 2010, for example, based on the third indication and the presence of its AID12 address in the first occurring user info field in the user info field list of frame 2022 (the second user info field). STA 2012 may determine that the uplink frame transmission is to be relayed via STA 2011, for example, based on the second indication and the presence of the AID12 address of STA 2011 in the second occurring user info field in the user info field list (the first user info field).

Frame 2022 may be an RTS frame or an extended control frame. STA 2012 may make the determination, for example, based on the indication of a transmission between AP 2010 and STA 2012 via STA 2011, the allocation of the second time period to STA 2012, and/or the presence of an address of STA 2012 as a receiver address. Frame 2022 may be an RTS frame. STA 2012 may determine that it is to initiate an uplink frame transmission to AP 2010, for example, based on the indication of a transmission between the AP 2010 and STA 2012 via STA 2011 and/or an indication of an uplink transmission, provided in a frame control field of the RTS frame. For example, based on the allocation of the second time period provided in duration/ID field, an address of STA 2012 provided as a receiver address and an address of STA 2011 provided as a transmitter address (e.g., sending (e.g., transmitting) frame 2022 to STA 2012), it may further determine that the uplink frame transmission is to be relayed via STA 2011.

Frame 2022 may be an extended control frame. STA 2012 may determine that it is to initiate an uplink frame transmission to AP 2010, for example, based on the indication of a transmission between the AP 2010 and STA 2012 via STA 2011 and/or an indication of an uplink transmission, provided in a field of the extended control frame. For example, based on the allocation of the second time period provided in duration/ID field, an address of STA 2012 provided as a receiver address and an address of STA 2011 provided as a transmitter address (e.g., sending (e.g., transmitting) frame 2022 to STA 2012), it may further determine that the uplink frame transmission is to be relayed via STA 2011. An address of AP 2010 as a destination address may be provided as a destination address.

STA 2012 may send (e.g., transmit) a CTS frame 2023, for example, based on (e.g., in response to) frame 2022. The time period, t1, for this transmission may start with the transmission of frame 2022. The time period, t1, for this transmission may start with the transmission of CTS frame 2023. STA 2012 may proceed to send (e.g., transmit) a PPDU 2024 to STA 2011 during the second time period (t1). STA 2011 may send (e.g., transmit) an ACK frame 2025 to STA 2012, for example, based on (e.g., in response to) PPDU 2024. STA 2011 may not send (e.g., transmit) an ACK frame if an implicit ACK procedure is used.

STA 2011 may send (e.g., transmit) a CTS frame 2026 at the beginning of the first time period (t2) before sending (e.g., transmitting) a PPDU 2027 to AP 2010, for example, after receiving PPDU 2024 from STA 2012. STA 2011 may not send (e.g., transmit) a CTS frame before sending (e.g., transmitting) PPDU 2027 to AP 2010. The time period, t2, for this transmission may start with the transmission of ACK frame 2025. The time period, t2, for this transmission may start with the transmission of CTS frame 2026. PPDU 2027 may be based on PPDU 2024. The data payload of PPDU 2027 may be the same as the data payload of PPDU 2024. STA 2011 may receive an ACK frame 2028 from AP 2010, based on (e.g., in response to) PPDU 2027. ACK frames 2025 and 2028 may be block ACK (BA) frames.

As shown in FIG. 20, the TXS-based relaying procedure may ensure that STA 2012 may be triggered to start the uplink relay transmission to AP 2010, for example, even though STA 2012 may be outside the communication range of AP 2010. The TXS-based relaying procedure may solve the problem that would arise if STA 2012 fails to receive MRTT frame 2020 despite being within the communication range of AP 2010.

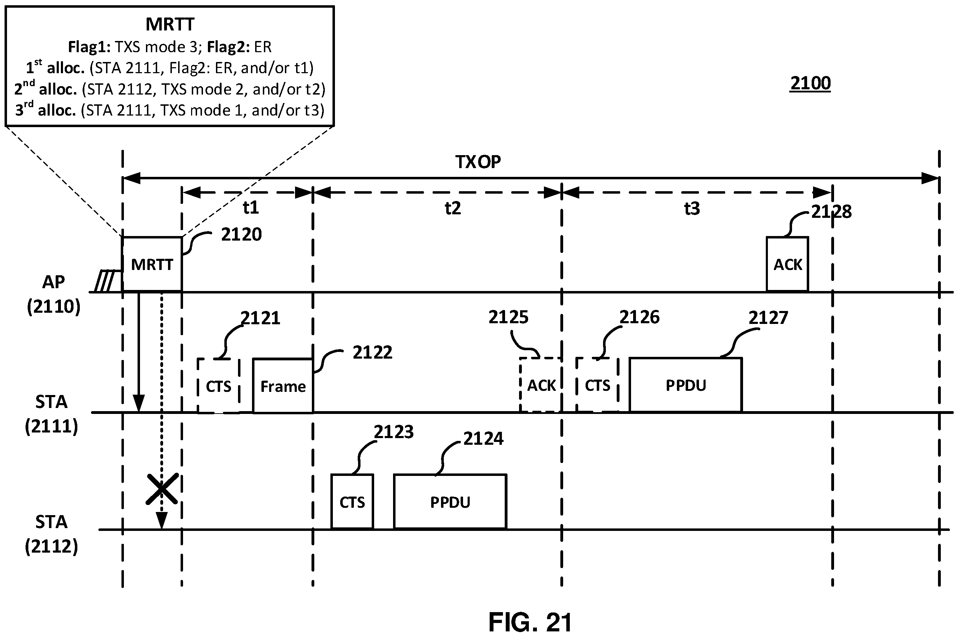

FIG. 21 shows an example of a TXS-based relaying procedure for relaying uplink traffic from a STA to an AP. As shown in FIG. 21, an example 2100 may include AP 2110, STA 2111, and STA 2112. STAs 2111 and 2112 may be associated with AP 2110. STA 2111 may be within the communication range of AP 2110 but that STA 2112 may be outside the communication range of AP 2110. STAs 2111 and 2112 may or may not be within each other's communication range. STA 2111 may receive data frames from AP 2110 destined to itself. STA 2111 may serve as a relay for STA 2112. AP 2110 may prefer to send (e.g., transmit) a PPDU to STA 2112 via STA 2111 in order to increase the throughput in a downlink transmission. AP 2110 may prefer to receive a PPDU from STA 2112 via STA 2111 in order to increase the throughput in an uplink transmission.

As shown in FIG. 21, the TXS-based relaying procedure may begin with AP 2110 sending (e.g., transmitting) an MRTT frame 2120 after obtaining a TXOP. MRTT frame 2120 may comprise a plurality of allocations for a plurality of respective STAs. An allocation of MRTT frame 2120 may comprise an identifier of a STA, a time period (of the TXOP) allocated to the STA, and/or a TXS mode for the allocated time period. MRTT frame 2120 may comprise a first allocation for STA 2111, a second allocation for STA 2112 and a third allocation for STA 2111. The first allocation may comprise a first time period (e.g., t3 as shown in FIG. 21) of the TXOP. The second allocation may comprise a second time period (e.g., t2 as shown in FIG. 21) of the TXOP. The third allocation may comprise a third time period (e.g., t1 as shown in FIG. 21) of the TXOP.

MRTT frame 2120 may further comprise a first indication (e.g., Flag2 in FIG. 21) of transmission, by STA 2111, of a frame, that indicates allocation of the second time period to STA 2112. For example, MRTT frame 2120 may indicate that STA 2111 is to send (e.g., transmit) a frame that repeats some of the information (e.g., the second allocation to STA 2112) contained in MRTT frame 2120. The first indication may comprise a request by AP 2110 to STA 2111 to send (e.g., transmit) the frame due to STA 2112 being outside the communication range of AP 2110. The first indication may comprise a request by AP 2110 to STA 2111 to send (e.g., transmit) the frame to extend the range of MRTT frame 2120. The first indication of transmission of the frame may be provided in a common info field of the MRTT frame. The first indication may be provided in one of the reserved bits (e.g., B22, B26, B53 or B63) of the common info field as shown in FIG. 12. The third allocation for STA 2111 comprising the third time period (e.g., t1 as shown in FIG. 21) of the TXOP may be used for sending (e.g., transmitting) the frame to indicate allocation of the second time period to STA 2112.

MRTT frame 2120 may further comprise a second indication (e.g., Flag1 in FIG. 21) that the first time period and the second time period are for a transmission between the AP and STA 2112 via STA 2111 (e.g., a relay transmission). The plurality of allocations of MRTT frame 2120 may be provided in a user info field list comprising a plurality of user info fields. Each user info field corresponds to a respective allocation and to a respective STA of the allocated STAs. For example, MRTT frame 2120 may comprise a first user info field comprising the first allocation for STA 2111 and a second user info field comprising the second allocation for STA 2112. MRTT frame 2120 may further comprise a third user info field comprising the third allocation for STA 2111. The third user info field may further comprise the first indication of transmission of a frame, by STA 2111. The frame may indicate allocation of the second time period to STA 2112. The first time period may be indicated in an allocation duration subfield of the first user info field. The second time period may be indicated in an allocation duration subfield of the second user info field. The third time period may be indicated in an allocation duration subfield of the third user info field.

The order of the user info fields in the user info field list corresponds to the order in time of the allocated time periods. For example, as shown in FIG. 21, where the first time period (t3) follows the second time period (t2) in time, the first user info field comprising the first allocation comprising the first period may follow, in the user info field list, the second user info field comprising the second allocation comprising the second time period. The first time period may be a short inter-frame space (SIFS) after the second time period. Additionally or alternatively, as shown in FIG. 21, where the second time period (t2) follows the third time period (t1) in time, the second user info field comprising the second allocation comprising the second period may follow, in the user info field list, the third user info field comprising the third allocation comprising the third time period. The second time period may be a short inter-frame space (SIFS) after the third time period.

An allocation of MRTT frame 2120 may include a TXS mode for the STA corresponding to the allocation. TXS mode may be set to 1 for transmission to the AP or may be set to 2 for transmission to a STA, for example, if TXS mode is present in the user info field. For example, the second indication may be provided in a TXS mode subfield of MRTT frame 2120. The TXS mode subfield may be provided in a common info field of MRTT frame 2120. The TXS mode subfield may be set to 3. The TXS mode being equal to 3 may indicate to STAs 2111 and 2112 that the allocated time portions are to be used for a relaying operation.

MRTT frame 2120 may further comprise a third indication (not shown in FIG. 21) of whether the transmission between AP 2110 and STA 2112 is an uplink transmission or a downlink transmission. For example, the third indication may indicate that the transmission is a downlink transmission. The first user info field comprising the first time period may precede, in the user info field list in MRTT frame 2120, the second user info field comprising the second time period. For example, the second indication may indicate that the transmission is an uplink transmission. The first user info field comprising the first time period may follow, in the user info field list in MRTT frame 2120, the second user info field comprising the second time period. MRTT frame 2120 may not comprise a third indication of whether the transmission between AP 2110 and STA 2112 is an uplink transmission or a downlink transmission. STA 2111 may determine whether the transmission between AP 2110 and STA 2112 is an uplink transmission or a downlink transmission, based on the order of the user info fields in the user info field list and/or the individual TXS modes in the user info fields (if present). The third indication may be provided in the common info field of MRTT frame 2120, for example, if MRTT frame 2120 comprises the third indication. The third indication may be provided in one of the reserved bits (e.g., B22, B26, B53 or B63) of the common info field as shown in FIG. 12.

STA 2111 may determine that it is to relay an uplink frame from STA 2112 to AP 2110, and that it has to send a frame to STA 2112 to inform STA 2112 of the relaying operation and the allocation of the second time period (t2) to STA 2112, for example, based on receiving MRTT frame 2120. STA 2111 may make this determination based on the first indication, the second indication, the third indication and/or the order of the first user info field, the second user info field and the third user info field in the user info field list of MRTT frame 2120. For example, based on the first indication (e.g., Flag2 in FIG. 21), the second indication (e.g., Flag1 in FIG. 21) and the presence of its AID12 address in the first occurring user info field in the user info field list (the third user info field), STA 2111 may determine that it has to send (e.g., transmit) a frame 2122 to STA 2112 during the third time period (t1), to inform STA 2112 of the relaying operation and the allocation of the second time period (t2). STA 2111 may determine that it is to send (e.g., transmit) an uplink frame to AP 2110 during the first time period (t3), for example, based on the third indication (not shown in FIG. 21) and the presence of its AID12 address in the third occurring and last user info field in the user info field list of MRTT frame 2120 (the first user info field). STA 2111 may determine that the uplink frame is a relay frame to be received from STA 2112 during the second time period (t2), for example, based on the second indication (e.g., Flag1 in FIG. 21) and the presence of the AID12 address of STA 2112 in the second occurring user info field in the user info field list (the second user info field).

STA 2111 may send (e.g., transmit) a CTS frame 2121 to AP 2110 before sending (e.g., transmitting) frame 2122 to STA 2112, for example, after receiving MRTT frame 2120 from AP 2110. STA 2111 may not send (e.g., transmit) a CTS frame to AP 2110 before sending (e.g., transmitting) frame 2122 to STA 2112. The time period, t1, for this transmission may start with the transmission of MRTT frame 2120. Frame 2122 may comprise/indicate the second allocation to STA 2112 (contained in MRTT frame 2120) or the allocation of the second time period to STA 2112. Frame 2122 may comprise an MRTT frame. Frame 2122 may be identical to MRTT frame 2120. For example, STA 2111 may simply repeat MRTT frame 2120. For example, the data content of frame 2122 may be the same as the data content of MRTT frame 2120. That is, STA 2111 may construct frame 2122 by copying the data content of MRTT frame 2120. For example, frame 2122 may comprise a request-to-send (RTS) frame or an extended control frame. The RTS frame or the extended control frame may comprise/indicate the second allocation to STA 2112 (contained in MRTT frame 2120) or the allocation of the second time period to STA 2112. The RTS or the extended control frame may further comprise an address of STA 2112 as a receiver address. The RTS frame or the extended control frame may further comprise an indication of a transmission between AP 2110 and STA 2112 via STA 2111 (indication of a relay transmission between AP 2110 and STA 2112).

STA 2112 may determine that it is being triggered by AP 2110 to send (e.g., transmit) an uplink frame to AP 2110 via STA 2111 during the second time period (t2), for example, based on receiving frame 2122 from STA 2111. STA 2112 may make this determination based on the first indication, the second indication, the third indication and/or the order of the first user info field, the second user info field and the third user info field in the user info field list of frame 2122, for example, where frame 2122 may be a repetition of MRTT frame 2120 or where frame 2122 may comprise the same data content as MRTT frame 2120. STA 2112 may determine that it is outside the communication range of AP 2110 for the relaying operation, for example, based on the first indication and receiving frame 2122 from STA 2111. STA 2112 may determine that it is to initiate an uplink frame transmission to AP 2110, for example, based on the third indication and the presence of its AID12 address in the second occurring user info field in the user info field list of frame 2122 (the second user info field), for example, based on the second indication and the presence of the AID12 address of STA 2111 in the third occurring user info field in the user info field list (the first user info field). STA 2112 may determine that the uplink frame transmission is to be relayed via STA 2111.

STA 2112 may make this determination based on the indication of a transmission between AP 2110 and STA 2112 via STA 2111, the allocation of the second time period to STA 2112 and the presence of an address of STA 2112 as a receiver address, for example, where frame 2122 may be an RTS frame or an extended control frame. STA 2112 may determine that it is to initiate an uplink frame transmission to AP 2110 based on the indication of a transmission between AP 2110 and STA 2112 via STA 2111 and/or an indication of an uplink transmission, provided in a frame control field of the RTS frame, for example, where frame 2122 may be an RTS frame. For example, based on the allocation of the second time period provided in duration/ID field, an address of STA 2112 provided as a receiver address and an address of STA 2111 provided as a transmitter address (e.g., sending (e.g., transmitting) frame 2122 to STA 2112), it may further determine that the uplink frame transmission is to be relayed via STA 2111.

STA 2112 may determine that it is to initiate an uplink frame transmission to AP, based on the indication of a transmission between the AP 2110 and STA 2112 via STA 2111 and/or an indication of an uplink transmission, provided in a field of the extended control frame, for example, where frame 2122 may be an extended control frame. For example, based on the allocation of the second time period provided in duration/ID field, an address of STA 2112 provided as a receiver address and an address of STA 2111 provided as a transmitter address (e.g., sending (e.g., transmitting) frame 2122 to STA 2112), it may further determine that the uplink frame transmission is to be relayed via STA 2111. An address of AP 2110 as a destination address may be provided as a destination address.

STA 2112 may send (e.g., transmit) a CTS frame 2123, for example, based on (e.g., in response to) frame 2122. The time period, t2, for this transmission may start with the transmission of frame 2122. The time period, t2, for this transmission may start with the transmission of CTS frame 2123. STA 2112 may then proceed to send (e.g., transmit) a PPDU 2124 to STA 2111 during the second time period (t2). STA 2111 may send (e.g., transmit) an ACK frame 2125 to STA 2112, for example, based on (e.g., in response to) PPDU 2124. For example, STA 2111 may not send (e.g., transmit) an ACK frame if an implicit ACK procedure is used.

STA 2111 may send (e.g., transmit) a CTS frame 2126 at the beginning of the first time period (t3) before sending (e.g., transmitting) a PPDU 2127 to AP 2110, for example, after receiving PPDU 2124 from STA 2112. For example, STA 2111 may not send (e.g., transmit) a CTS frame before sending (e.g., transmitting) PPDU 2127 to AP 2110. The time period, t3, for this transmission may start with the transmission of ACK frame 2125. The time period, t3, for this transmission may start with the transmission of CTS frame 2126.

PPDU 2127 may be based on PPDU 2124. The data payload of PPDU 2127 may be the same as the data payload of PPDU 2124. STA 2111 may receive an ACK frame 2128 from AP 2110, based on (e.g., in response to) PPDU 2127. ACK frames 2125 and 2128 may be block ACK (BA) frames.

As shown in FIG. 21, the TXS-based relaying procedure may ensure that STA 2112 may be triggered to start the uplink relay transmission to AP 2110, for example, even though STA 2112 may be outside the communication range of AP 2110. The TXS-based relaying procedure may solve the problem that may arise if STA 2112 fails to receive MRTT frame 2120, for example, despite being within the communication range of AP 2110.

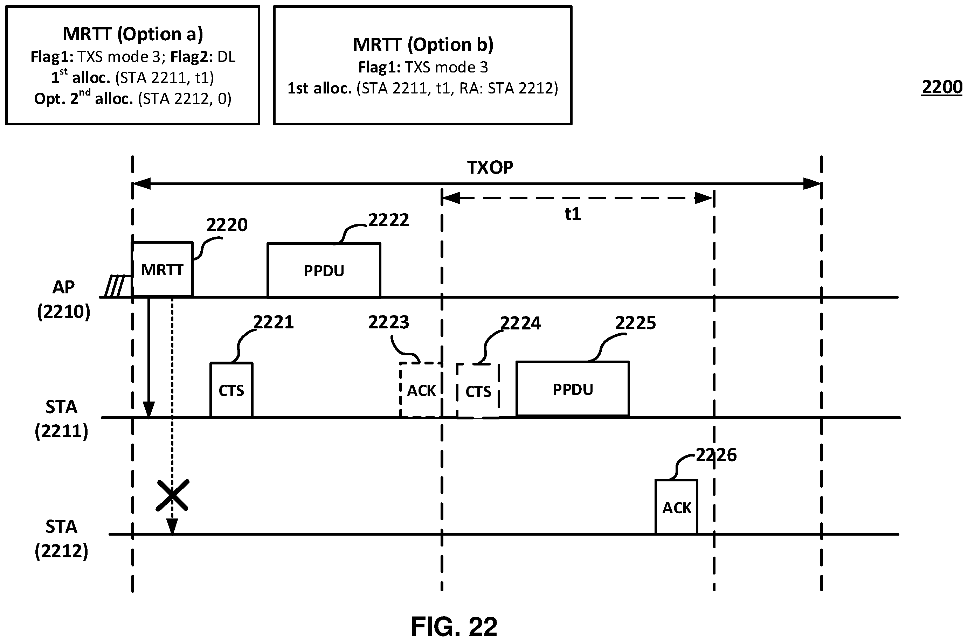

FIG. 22 shows an example of a TXS-based relaying procedure for relaying downlink traffic from an AP to a STA. As shown in FIG. 22, an example 2200 may include AP 2210, STA 2211, and STA 2212. For example, STAs 2211 and 2212 may be associated with AP 2210. STA 2211 may be within the communication range of AP 2210 but that STA 2212 is outside the communication range of AP 2210. STAs 2211 and 2212 may or may not be within each other's communication range. STA 2211 may receive data frames from AP 2210 destined to itself. For example, STA 2211 may serve as a relay for STA 2212. AP 2210 may prefer to send (e.g., transmit) a PPDU to STA 2212 via STA 2211 in order to increase the throughput in a downlink transmission. For example, AP 2210 may prefer to receive a PPDU from STA 2212 via STA 2211 in order to increase the throughput in an uplink transmission.

As shown in FIG. 22, the TXS-based relaying procedure may begin with AP 2210 sending (e.g., transmitting) an MRTT frame 2220 (shown as "Option a" in FIG. 22) after obtaining a TXOP. MRTT frame 2220 may comprise a plurality of allocations for a plurality of respective STAs. An allocation of MRTT frame 2220 may comprise an identifier of a STA, a time period (of the TXOP) allocated to the STA, and/or a TXS mode for the allocated time period. MRTT frame 2220 may comprise a first allocation for STA 2211 and/or an optional second allocation for STA 2212. The first allocation may comprise a first time period (e.g., t1 as shown in FIG. 22) of the TXOP. The second allocation may comprise a second time period (e.g., t2 as shown in FIG. 22) of the TXOP. MRTT frame 2220 may comprise a first indication that the first time period and the second time period are for a transmission between the AP and STA 2212 via STA 2211 (e.g., a relay transmission). The second time period (e.g., t2) allocated to STA 2212 may be equal to zero.

The plurality of allocations of MRTT frame 2220 may be provided in a user info field list comprising a plurality of user info fields. Each user info field may correspond to a respective allocation and to a respective STA of the allocated STAs. For example, MRTT frame 2220 may comprise a first user info field comprising the first allocation for STA 2211 and a second user info field comprising the second allocation for STA 2212. The first time period may be indicated in an allocation duration subfield of the first user info field. The second time period may be indicated in an allocation duration subfield of the second user info field.

The order of the user info fields in the user info field list may correspond to the order in time of the allocated time periods. For example, as shown in FIG. 22, where the first time period (e.g., 11) precedes the second time period (e.g., t2) in time, the first user info field, which may comprise the first allocation comprising the first period, may precede, in the user info field list, the second user info field, which may comprise the second allocation comprising the second time period. For example, the second time period may be a short inter-frame space (SIFS) after the first time period.

An allocation of MRTT frame 2220 may include a TXS mode for the STA corresponding to the allocation. TXS mode may be set to 1 for transmission to the AP or may be set to 2 for transmission to a STA, for example, if TXS mode is present in the user info field. For example, the first indication may be provided in a TXS mode subfield of MRTT frame 2220. The TXS mode subfield may be provided in a common info field of MRTT frame 2220. The TXS mode subfield may be set to 3. The TXS mode being equal to 3 may indicate to STAs 2211 and 2212 that the allocated time portions may be used for a relaying operation.

MRTT frame 2220 may further comprise a second indication of whether the transmission between AP 2210 and STA 2212 is an uplink transmission or a downlink transmission. The first user info field comprising the first time period may precede, in the user info field list in MRTT frame 2220, the second user info field comprising the second time period, for example, where the second indication indicates that the transmission is a downlink transmission. The first user info field comprising the first time period may follow, in the user info field list in MRTT frame 2220, the second user info field comprising the second time period, for example, where the second indication indicates that the transmission is an uplink transmission. MRTT frame 2220 may not comprise a second indication of whether the transmission between AP 2210 and STA 2212 is an uplink transmission or a downlink transmission. The second indication may be provided in the common info field of MRTT frame 2220, for example, if MRTT frame 2220 comprises the second indication. The second indication may be provided in one of the reserved bits (e.g., B22, B26, B53 or B63) of the common info field as shown in FIG. 12.

STA 2211 may determine that it is being triggered by MRTT frame 2220 to send (e.g., transmit) a downlink frame (to be received from AP 2210) to STA 2212 during the first time period (11), for example, based on receiving MRTT frame 2220. STA 2211 may make this determination based on the first indication, the second indication, and/or the order of the first user info field and the second user info field in the user info field list of MRTT frame 2220. STA 2211 may determine that it is to relay a downlink frame transmission to STA 2212, where it is to receive the downlink frame transmission from AP 2210, for example, based on the second indication and the presence of its AID12 address in the first occurring user info field in the user info field list of MRTT frame 2220 (the first user info field). STA 2211 may determine that the downlink frame transmission is to be relayed to STA 2212, for example, based on the first indication and the presence of the AID 12 address of STA 2212 in the second occurring user info field in the user info field list (the second user info field).

STA 2211 may send (e.g., transmit) a CTS frame 2221, for example, based on (e.g., in response to) MRTT frame 2220. AP 2210 may send (e.g., transmit) a PPDU 2222 to STA 2211, based on receiving CTS frame 2221. STA 2212 may set its NAV for a duration indicated in the CTS frame 2221, for example, based on hearing CTS frame 2221. The duration indicated in CTS frame 2221 may be until the beginning of the first time period (t1). The duration indicated in CTS frame 2221 may be until the end of duration the first time period (t1). STA 2211 may send (e.g., transmit) an ACK frame 2223 to AP 2210, for example, based on (e.g., in response to) PPDU 2222. STA 2211 may not send (e.g., transmit) an ACK frame if an implicit ACK procedure is used.

STA 2211 may send (e.g., transmit) a CTS frame 2224 at the beginning of the first time period (t1) before sending (e.g., transmitting) a PPDU 2225 to STA 2212, for example, after receiving PPDU 2222 from AP 2210. STA 2211 may not send (e.g., transmit) a CTS frame before sending (e.g., transmitting) PPDU 2225 to STA 2212. The time period, t1, for this transmission may start with the transmission of ACK frame 2223. The time period, t1, for this transmission may start with the transmission of CTS frame 2224.

PPDU 2225 may be based on PPDU 2222. The data payload of PPDU 2225 may be the same as the data payload of PPDU 2222. STA 2211 may receive an ACK frame 2226 from STA 2212, for example, based on (e.g., in response to) PPDU 2225. ACK frames 2223 and 2226 may be block ACK (BA) frames.

Being outside the communication range of AP 2210, STA 2212 does not receive MRTT frame 2220. For example, STA 2212 may not determine (or learn) that it is to receive a downlink frame from AP 2210 via STA 2211. However, STA 2212 may successfully receive the downlink frame destined to itself, on condition of setting its NAV upon hearing CTS frame 2221 and/or by setting its NAV upon hearing CTS frame 2224. However, if CTS frame 2224 is not sent (e.g., transmitted) by STA 2211 and/or if the NAV duration of CTS frame 2221 does not extend to the time period t1, STA 2212 may attempt to access the channel at the beginning of the time period t1 instead of waiting to receive PPDU 2225 from STA 2211.

As shown as "Option b" in FIG. 22, MRTT frame 2220 may not comprise the second allocation and may only comprise the first allocation with the receiver address indicated. MRTT frame 2220 may further comprise an identifier of STA 2212 as a receiver STA. As the first allocation to STA 2211 is the only allocation in the list of allocations (e.g., user info fields) in MRTT frame 2220, the identification of STA 2212 in the first allocation indicates that STA 2212 is the destination STA of the downlink frame. An identifier of the receiver STA may be provided in the reserved bits of the user info field as shown in FIG. 11. MRTT frame 2220 may further comprise a first indication that the first time period is for a transmission between the AP 2210 and STA 2212 via STA 2211 (e.g., a relay transmission).

STA 2211 may determine that it is being triggered by MRTT frame 2220 to send (e.g., transmit) a downlink frame (to be received from AP 2210) to STA 2212 during the first time period (11), for example, based on receiving MRTT frame 2220 from AP 2210. STA 2211 may make this determination based on the first indication and/or the first user info field in the user info field list of MRTT frame 2220. The presence of its AID12 address in the first user info field in the user info field list of MRTT frame 2220, and the presence of an identifier of STA 2212 as a destination STA in the first user info field in the user info field list of MRTT frame 2220, STA 2211 may determine that it is to relay a downlink frame to STA 2212 to be received from AP 2210, for example, based on the first indication.

STA 2211 may send (e.g., transmit) a CTS frame 2221. STA 2211 may wait to receive the downlink frame from AP 2210, for example, based on (e.g., in response to) MRTT frame 2220. AP 2210 may send (e.g., transmit) a PPDU 2222 to STA 2211, for example, based on receiving CTS frame 2221. STA 2211 may send (e.g., transmit) an ACK frame 2223 to AP 2210, for example, based on (e.g., in response to) PPDU 2222. STA 2211 may not send (e.g., transmit) an ACK frame if an implicit ACK procedure is used.

STA 2211 may send (e.g., transmit) a CTS frame 2224 at the beginning of the first time period (t1) before sending (e.g., transmitting) a PPDU 2225 to STA 2212, for example, after receiving PPDU 2222 from AP 2210. STA 2211 may not send (e.g., transmit) a CTS frame before sending (e.g., transmitting) PPDU 2225 to STA 1812. The time period, t1, for this transmission may start with the transmission of ACK frame 2223. The time period, t1, for this transmission may start with the transmission of CTS frame 2224.

PPDU 2225 may be based on PPDU 2222. The data payload of PPDU 2225 may be the same as the data payload of PPDU 2222. STA 2211 may receive an ACK frame 2226 from STA 2212, based on (e.g., in response to) PPDU 2225. ACK frames 2223 and 2226 may be block ACK (BA) frames.

Being outside the communication range of AP 2210, STA 2212 may not receive MRTT frame 2220. For example, STA 2212 may not determine (or learn) that it is to receive a downlink frame from AP 2210 via STA 2211. However, STA 2212 may successfully receive the downlink frame destined to itself, on condition of setting its NAV upon hearing CTS frame 2221 and/or by setting its NAV upon hearing CTS frame 2224. However, if CTS frame 2224 is not sent (e.g., transmitted) by STA 2211 and/or if the NAV duration of CTS frame 2221 does not extend to the time period t1, STA 2212 may attempt to access the channel at the beginning of the time period t1 instead of waiting to receive PPDU 2225 from STA 2211.

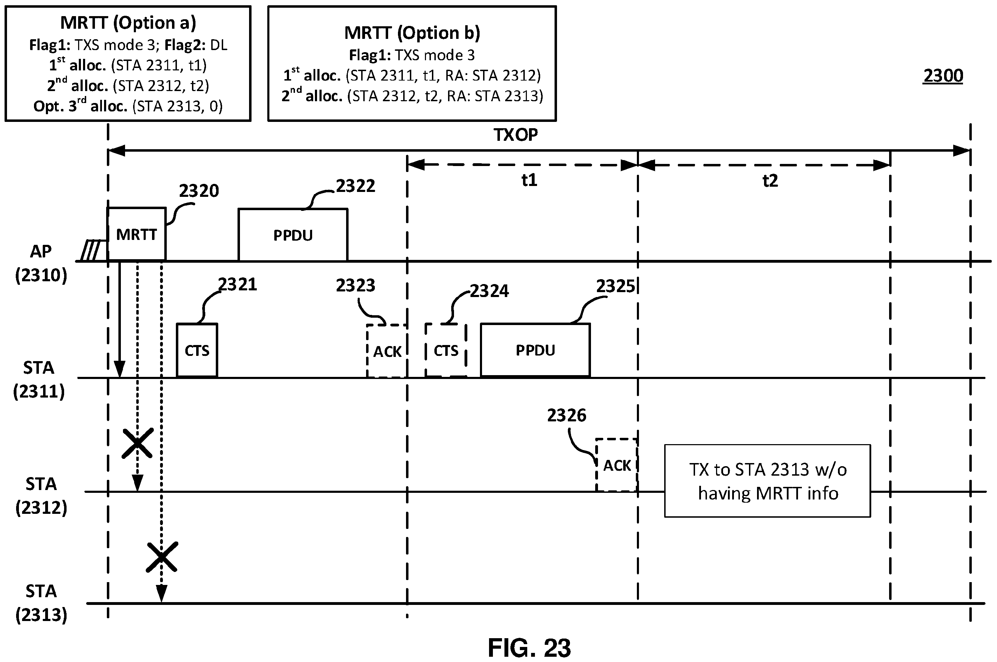

FIG. 23 shows an example of a TXS-based relaying procedure for relaying downlink traffic from an AP to a STA. As shown, an example 2300 may include AP 2310, STA 2311, STA 2312 and STA 2313. STAs 2311, 2312 and 2313 may be associated with AP 2310. STA 2311 may be within the communication range of AP 2310 but that STAs 2312 and 2313 are outside the communication range of AP 2310. STAs 2311, 2312 and 2313 may or may not be within each other's communication range. STAs 2311 and 2312 may receive data frames from AP 2310 destined to themselves. STAs 2311 and 2312 may serve as relays for STA 2313. AP 2310 may prefer to send (e.g., transmit) a PPDU to STA 2313 via STAs 2311 and 2312 in order to increase the throughput in a downlink transmission. AP 2310 may prefer to receive a PPDU from STA 2313 via STAs 2311 and 2312 in order to increase the throughput in an uplink transmission.

As shown in FIG. 23, the TXS-based relaying procedure may begin with AP 2310 sending (e.g., transmitting) an MRTT frame 2320 (e.g., shown as "Option a" in FIG. 23) after obtaining a TXOP. MRTT frame 2320 (e.g., option a) may comprise a plurality of allocations for a plurality of respective STAs. An allocation of MRTT frame 2320 may comprise an identifier of a STA, a time period (of the TXOP) allocated to the STA, and/or a TXS mode for the allocated time period. MRTT frame 2320 may comprise a first allocation for STA 2311, a second allocation for STA 2312, and an optional third allocation for STA 2313. The first allocation may comprise a first time period (e.g., t1 as shown in FIG. 23) of the TXOP. The second allocation may comprise a second time period (e.g., t2 as shown in FIG. 23) of the TXOP. The third allocation may comprise a third time period (e.g., t3 as shown in FIG. 23) of the TXOP. MRTT frame 2320 may further comprise a first indication that the first time period and the second time period are for a transmission between the AP and STA 2313 via STAs 2311 and 2312 (e.g., a relay transmission). The third time period (t3) allocated to STA 2313 may be equal to zero.

The plurality of allocations of MRTT frame 2320 may be provided in a user info field list comprising a plurality of user info fields. Each user info field corresponds to a respective allocation and to a respective STA of the allocated STAs. For example, MRTT frame 2320 may comprise a first user info field comprising the first allocation for STA 2311, a second user info field comprising the second allocation for STA 2312 and a third user info field comprising the third allocation for STA 2313. The first time period may be indicated in an allocation duration subfield of the first user info field. The second time period may be indicated in an allocation duration subfield of the second user info field. The third time period may be indicated in an allocation duration subfield of the third user info field.

The order of the user info fields in the user info field list corresponds to the order in time of the allocated time periods. For example, as shown in FIG. 23, where the first time period (t1) precedes the second time period (t2) in time, the first user info field comprising the first allocation comprising the first period may precede, in the user info field list, the second user info field comprising the second allocation comprising the second time period. The second time period may be a short inter-frame space (SIFS) after the first time period. Similarly, as shown in FIG. 23, where the second time period (t2) precedes the third time period (t3) in time, the second user info field comprising the second allocation comprising the second period may precede, in the user info field list, the third user info field comprising the third allocation comprising the third time period. The third time period may be a SIFS after the second time period.

An allocation of MRTT frame 2320 may include a TXS mode for the STA corresponding to the allocation. TXS mode may be set to 1 for transmission to the AP or may be set to 2 for transmission to a STA, for example, if TXS mode is present in the user info field. The first indication may be provided in a TXS mode subfield of MRTT frame 2320. The TXS mode subfield may be provided in a common info field of MRTT frame 2320. The TXS mode subfield may be set to 3. The TXS mode being equal to 3 may indicate to STAs 2311, 2312 and 2313 that the allocated time portions are to be used for a relaying operation.

MRTT frame 2320 may further comprise a second indication of whether the transmission between AP 2310 and STA 2313 is an uplink transmission or a downlink transmission. The first user info field comprising the first time period may precede, in the user info field list in MRTT frame 2320, the second user info field comprising the second time period and the second user info field comprising the second time period may precede, in the user info field list in MRTT frame 2320, the third user info field comprising the third time period, for example, where the second indication indicates that the transmission is a downlink transmission. The first user info field comprising the first time period may follow, in the user info field list in MRTT frame 2320, the second user info field comprising the second time period and the second user info field comprising the second time period may follow, in the user info field list in MRTT frame 2320, the third user info field comprising the third time period, for example, where the second indication indicates that the transmission is an uplink transmission. MRTT frame 2320 may not comprise a second indication of whether the transmission between AP 2310 and STA 2313 is an uplink transmission or a downlink transmission. The second indication may be provided in the common info field of MRTT frame 2320, for example, if MRTT frame 2320 comprises the second indication. The second indication may be provided in one of the reserved bits (e.g., B22, B26, B53 or B63) of the common info field as shown in FIG. 12.

STA 2311 may determine that it is being triggered by MRTT frame 2320 to send (e.g., transmit) a downlink frame (to be received from AP 2310) to STA 1812 during the first time period (t1), for example, on receiving MRTT frame 2320. STA 2311 may make this determination based on the first indication, the second indication, and/or the order of the first user info field, the second user info field and the third user info field in the user info field list of MRTT frame 2320. For example, based on the second indication and the presence of its AID12 address in the first occurring user info field in the user info field list of MRTT frame 2320 (the first user info field), STA 2311 may determine that it is to relay a downlink frame transmission to STA 2312, where it is to receive the downlink frame transmission from AP 2310. STA 2311 may determine that the downlink frame transmission is to be relayed to STA 2312, for example, based on the first indication and the presence of the AID12 address of STA 2312 in the second occurring user info field in the user info field list (the second user info field).

STA 2311 may send (e.g., transmit) a CTS frame 2321, for example, based on (e.g., in response to) MRTT frame 2320. AP 2310 may send (e.g., transmit) a PPDU 2322 to STA 2311, for example, based on receiving CTS frame 2321. STA 2312 may set its NAV for a duration indicated in the CTS frame 2321, for example, based on hearing CTS frame 2321. The duration indicated in CTS frame 2321 may be until the beginning of the first time period (t1). The duration indicated in CTS frame 2321 may be until the end of duration the first time period (t1). based on (e.g., in response to) PPDU 2322, STA 2311 may send (e.g., transmit) an ACK frame 2323 to AP 2310. STA 2311 may not send (e.g., transmit) an ACK frame if an implicit ACK procedure is used.

STA 2311 may send (e.g., transmit) a CTS frame 2324 at the beginning of the first time period (t1) before sending (e.g., transmitting) a PPDU 2325 to STA 2312, for example, after receiving PPDU 2322 from AP 2310. STA 2311 may not send (e.g., transmit) a CTS frame before sending (e.g., transmitting) PPDU 2325 to STA 2312. The time period, t1, for this transmission may start with the transmission of ACK frame 2323. The time period, t1, for this transmission may start with the transmission of CTS frame 2324.

PPDU 2325 may be based on PPDU 2322. The data payload of PPDU 2325 may be the same as the data payload of PPDU 2322. STA 2311 may receive an ACK frame 2326 from STA 2312, based on (e.g., in response to) PPDU 2325. ACK frames 2323 and 2326 may be block ACK (BA) frames. Being outside the communication range of AP 2310, STA 2312 may not receive MRTT frame 2320. For example, STA 2312 may not determine that it is to receive a downlink frame from AP 2310 via STA 2311 and that it is to send (e.g., transmit) the downlink frame to STA 2313. Despite not receiving MRTT frame 2320, STA 2312 may successfully receive the downlink frame, on condition of setting its NAV upon hearing CTS frame 2321 and/or by setting its NAV upon hearing CTS frame 2324. However, if CTS frame 2324 is not sent (e.g., transmitted) by STA 2311 and/or if the NAV duration of CTS frame 2321 does not extend to the time period t1, STA 2312 may attempt to access the channel at the beginning of the time period t1 instead of waiting to receive PPDU 2325 from STA 2311. In case STA 2312 receives PPDU 2325 successfully, by obtaining the receiver address as its own AID12 address and the destination address as the AID12 address of STA 2313 from PPDU 2325, STA 2312 may send (e.g., transmit) to STA 2313 a PPDU comprising the same data payload of PPDU 2325. Since STA 2312 does not know that it is triggered by AP 2310 within the TXS procedure and the content of the MRTT frame including the allocations, STA 2312 may send (e.g., transmit) to STA 2313 the PPDU comprising the same data payload of PPDU 2325 either directly with no TXOP protection or by sending the PPDU after an RTS-CTS exchange. However, this may reduce reliability and/or increase latency of the relay operation.

Being outside the communication range of AP 2310, STA 2313 may not receive MRTT frame 2320. For example, STA 2313 may not determine that it is to receive a downlink frame from AP 2310 via STAs 2311 and 2312 and that it is the destination STA of the downlink frame. Not receiving MRTT frame 2320, STA 2313 may still receive the downlink frame destined to itself. STA 2313 may set its NAV upon hearing CTS frame 2321 and then set its NAV upon hearing CTS frame 2324. However, if CTS frame 2324 is not sent (e.g., transmitted) by STA 2311 and/or if the NAV duration of CTS frame 2321 does not extend to the time period t2, STA 2313 may attempt to access the channel at the beginning of the time period t2 instead of waiting to receive a PPDU from STA 2312. STA 2313 may receive from STA 2312 the PPDU comprising the same data payload of PPDU 2325 either directly with no TXOP protection or with a TXOP protection such as after an RTS-CTS exchange. STA 2313 may not receive from STA 2312 the PPDU comprising the same data payload of PPDU 2325 if no TXOP protection is used, for example, STA 2313 may be busy due to a transmission from an OBSS station (not shown in FIG. 23).

As shown as "Option b" in FIG. 23, MRTT frame 2320 may not comprise the third allocation and may only comprise the first allocation and the second allocation with the receiver addresses indicated. The first allocation and the second allocation may each further comprise an identifier of a receiver STA. For example, the first allocation to STA 2311 may comprise an identifier of STA 2312 as a receiver STA. This means that STA 2311 should relay/send/transmit the downlink frame to STA 2312. Similarly, the second allocation to STA 2312 may comprise an identifier of STA 2313 as a receiver STA. This means that STA 2312 should relay/send/transmit the downlink frame to STA 2313. As the second allocation to STA 2312 is the last allocation in the list of allocations (e.g., user info fields) in MRTT frame 2320, the identification of STA 2313 in the second allocation indicates that STA 2313 is the destination STA of the downlink frame. An identifier of a receiver STA may be provided in the reserved bits of the user info field as shown in FIG. 11. MRTT frame 2320 may further comprise a first indication that the first time period and the second time period are for a transmission between AP 2310 and STA 2313 via STAs 2311 and 2312 (e.g., a relay transmission).

STA 2311 may determine that it is being triggered by MRTT frame 2320 to send (e.g., transmit) a downlink frame (to be received from AP 2310) to STA 2312 during the first time period (t1), for example, based on receiving MRTT frame 2320 from AP 2310. STA 2311 may make this determination based on the first indication and/or the first user info field in the user info field list of MRTT frame 2320. The presence of its AID12 address in the first user info field in the user info field list of MRTT frame 2320, and the presence of an identifier of STA 2312 as a destination STA in the first user info field in the user info field list of MRTT frame 2320, STA 2311 may determine that it is to relay a downlink frame to STA 2312 to be received from AP 2310, for example, based on the first indication.

STA 2311 may send (e.g., transmit) a CTS frame 2321. STA 2311 may then wait to receive the downlink frame from AP 2310, for example, based on (e.g., in response to) MRTT frame 2320. AP 2310 may send (e.g., transmit) a PPDU 2322 to STA 2311, for example, based on receiving CTS frame 2321. STA 2311 may send (e.g., transmit) an ACK frame 2323 to AP 2310, for example, based on (e.g., in response to) PPDU 2322. STA 2311 may not send (e.g., transmit) an ACK frame if an implicit ACK procedure is used.

STA 2311 may send (e.g., transmit) a CTS frame 2324 at the beginning of the first time period (t1) before sending (e.g., transmitting) a PPDU 2325 to STA 2312, for example, after receiving PPDU 2322 from AP 2310. STA 2311 may not send (e.g., transmit) a CTS frame before sending (e.g., transmitting) PPDU 2325 to STA 2312. The time period, t1, for this transmission may start with the transmission of ACK frame 2323. The time period, t1, for this transmission may start with the transmission of CTS frame 2324.

PPDU 2325 may be based on PPDU 2322. The data payload of PPDU 2325 may be the same as the data payload of PPDU 2322. STA 2311 may receive an ACK frame 2326 from STA 2312, based on (e.g., in response to) PPDU 2325. PPDU 2325 may be based on PPDU 2322. The data payload of PPDU 2325 may be the same as the data payload of PPDU 2322. ACK frames 2323 and 2326 may be block ACK (BA) frames.

Being outside the communication range of AP 2310, STA 2312 may not receive MRTT frame 2320. Not receiving MRTT frame 2320, STA 2312 may not determine that it is to receive a downlink frame from AP 2310 via STA 2311 and that it is to send (e.g., transmit) it to STA 2313. Despite not receiving MRTT frame 2320, STA 2312 may successfully receive the downlink frame it is to relay, by setting its NAV upon hearing CTS frame 2321, and/or by setting its NAV upon hearing CTS frame 2324. However, if CTS frame 2324 is not sent (e.g., transmitted) by STA 2311 and/or if the NAV duration of CTS frame 2321 does not extend to the time period t1, STA 2312 may attempt to access the channel at the beginning of the time period t1 instead of waiting to receive PPDU 2325 from STA 2311. In case STA 2312 receives PPDU 2325 successfully, by obtaining the receiver address as its own AID12 address and the destination address as the AID12 address of STA 2313 from PPDU 2325, STA 2312 may then send (e.g., transmit) to STA 2313 a PPDU comprising the same data payload of PPDU 2325. Since STA 2312 does not know that it is triggered by AP 2310 within the TXS procedure and the content of the MRTT frame including the allocations, STA 2312 may send (e.g., transmit) to STA 2313 the PPDU comprising the same data payload of PPDU 2325 either directly with no TXOP protection or by sending the PPDU with a TXOP protection such as after an RTS-CTS exchange. However, this may reduce reliability and/or increase latency of the relay operation.

Being outside the communication range of AP 2310, STA 2313 may not receive MRTT frame 2320. Not receiving MRTT frame 2320, STA 2313 may not determine that it is to receive a downlink frame from AP 2310 via STAs 2311 and 2312 and that it is the destination STA of the downlink frame. Not receiving MRTT frame 2320, STA 2313 may still receive the downlink frame destined to itself. STA 2313 may set its NAV upon hearing CTS frame 2321 and then set its NAV upon hearing CTS frame 2324. However, if CTS frame 2324 is not sent (e.g., transmitted) by STA 2311 and/or if the NAV duration of CTS frame 2321 does not extend to the time period t2, STA 2313 may attempt to access the channel at the beginning of the time period t2 instead of waiting to receive a PPDU from STA 2312. STA 2313 may receive from STA 2312 the PPDU comprising the same data payload of PPDU 2325 either directly with no TXOP protection or with a TXOP protection such as after an RTS-CTS exchange. STA 2313 may not receive from STA 2312 the PPDU comprising the same data payload of PPDU 2325 if no TXOP protection is used, for example, STA 2313 may be busy due to a transmission from an OBSS station (not shown in FIG. 23).

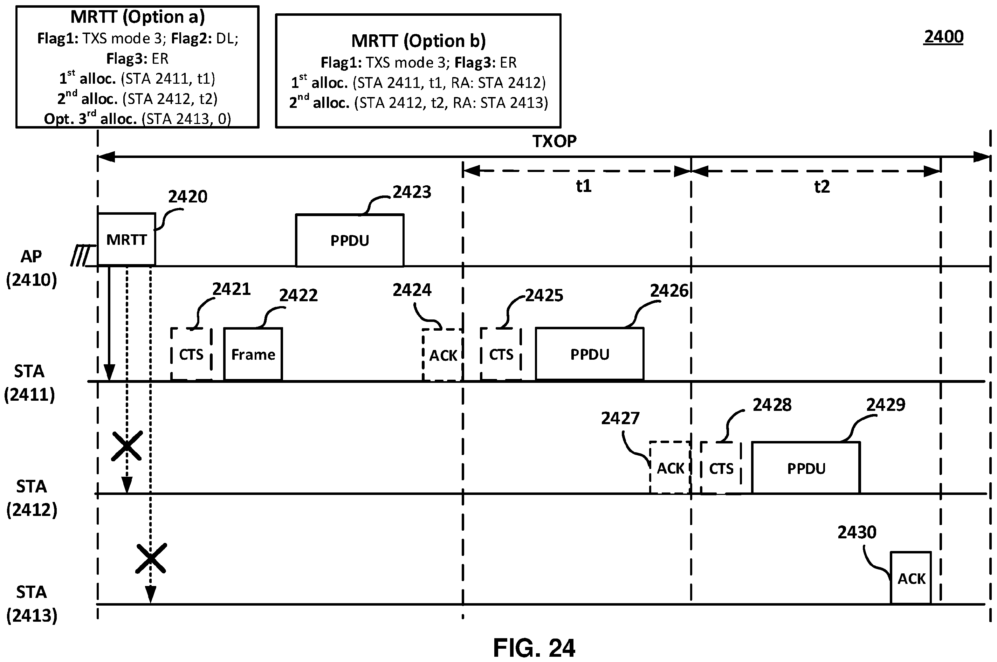

FIG. 24 shows an example of a TXS-based relaying procedure for relaying downlink traffic from an AP to a STA. As shown in FIG. 24, an example 2400 may include AP 2410, STA 2411, STA 2412 and STA 2413. STAs 2411, 2412 and 2413 may be associated with AP 2410. STA 2411 may be within the communication range of AP 2410 but that STAs 2412 and 2413 are outside the communication range of AP 2410. STAs 2411, 2412 and 2413 may or may not be within each other's communication range. STAs 2411 and 2412 may receive data frames from AP 2410 destined to themselves. STAs 2411 and 2412 may serve as relays for STA 2413. AP 2410 may prefer to send (e.g., transmit) a PPDU to STA 2413 via STAs 2411 and 2412 in order to increase the throughput in a downlink transmission. AP 2410 may prefer to receive a PPDU from STA 2413 via STAs 2411 and 2412 in order to increase the throughput in an uplink transmission.

As shown in FIG. 24, the procedure may begin with AP 2410 sending (e.g., transmitting) an MRTT frame 2420 (shown as "Option a" in FIG. 24) after obtaining a TXOP. MRTT frame 2420 (e.g., option a) may comprise a plurality of allocations for a plurality of respective STAs. An allocation of MRTT frame 2420 may comprise an identifier of a STA, a time period (of the TXOP) allocated to the STA, and/or a TXS mode for the allocated time period. MRTT frame 2420 may comprise a first allocation for STA 2411, a second allocation for STA 2412, and an optional third allocation for STA 2413. The first allocation may comprise a first time period (e.g., t1 in FIG. 24) of the TXOP. The second allocation may comprise a second time period (e.g., t2 in FIG. 24) of the TXOP. The third allocation may comprise a third time period (e.g., t3 in FIG. 24) of the TXOP. The third time period (t3) allocated to STA 2413 may be equal to zero.

MRTT frame 2420 may further comprise a first indication (e.g., Flag3 in FIG. 24) of transmission, by STA 2411, of a frame that indicates allocation of the second time period to STA 2412. In other words, MRTT frame 2420 may indicate that STA 2411 is to send (e.g., transmit) a frame that repeats some of the information (e.g., the second allocation to STA 2412) contained in MRTT frame 2420. The first indication may comprise a request by AP 2410 to STA 2411 to send (e.g., transmit) the frame due to STA 2412 being outside the communication range of AP 2410. The first indication may comprise a request by AP 2410 to STA 2411 to send (e.g., transmit) the frame to extend the range of MRTT frame 2420. The first indication of transmission of the frame is provided in a common info field of the MRTT frame. The first indication may be provided in one of the reserved bits (e.g., B22, B26, B53 or B63) of the common info field as shown in FIG. 12.

MRTT frame 2420 may further comprise a second indication (e.g., Flag1 in FIG. 24) that the first time period and the second time period are for a transmission between the AP and STA 2413 via STAs 2411 and 2412 (e.g., a relay transmission). The plurality of allocations of MRTT frame 2420 may be provided in a user info field list comprising a plurality of user info fields. Each user info field corresponds to a respective allocation and to a respective STA of the allocated STAs. For example, MRTT frame 2420 may comprise a first user info field comprising the first allocation for STA 2411, a second user info field comprising the second allocation for STA 2412 and a third user info field comprising the third allocation for STA 2413. The first time period may be indicated in an allocation duration subfield of the first user info field. The second time period may be indicated in an allocation duration subfield of the second user info field. The third time period may be indicated in an allocation duration subfield of the third user info field.

The order of the user info fields in the user info field list corresponds to the order in time of the allocated time periods. For example, as shown in FIG. 24, where the first time period (t1) precedes the second time period (t2) in time, the first user info field comprising the first allocation comprising the first period may precede, in the user info field list, the second user info field comprising the second allocation comprising the second time period. The second time period may be a short inter-frame space (SIFS) after the first time period. Similarly, as shown in FIG. 24, where the second time period (t2) precedes the third time period (t3) in time, the second user info field comprising the second allocation comprising the second period may precede, in the user info field list, the third user info field comprising the third allocation comprising the third time period. The third time period may be a SIFS after the second time period.

An allocation of MRTT frame 2420 may include a TXS mode for the STA corresponding to the allocation. TXS mode may be set to 1 for transmission to the AP or may be set to 2 for transmission to a STA, for example, if TXS mode is present in the user info field. The second indication may be provided in a TXS mode subfield of MRTT frame 2420. The TXS mode subfield may be provided in a common info field of MRTT frame 2420. The TXS mode subfield may be set to 3. The TXS mode being equal to 3 may indicate to STAs 2411, 2412 and 2413 that the allocated time portions are to be used for a relaying operation.

MRTT frame 2420 may further comprise a third indication (e.g., Flag2 in FIG. 24) of whether the transmission between AP 2410 and STA 2413 is an uplink transmission or a downlink transmission. The first user info field comprising the first time period may precede, in the user info field list in MRTT frame 2420, the second user info field comprising the second time period and the second user info field comprising the second time period may precede, in the user info field list in MRTT frame 2420, the third user info field comprising the third time period, for example, where the second indication indicates that the transmission is a downlink transmission. The first user info field comprising the first time period may follow, in the user info field list in MRTT frame 2420, the second user info field comprising the second time period and the second user info field comprising the second time period may follow, in the user info field list in MRTT frame 2420, the third user info field comprising the third time period, for example, where the second indication indicates that the transmission is an uplink transmission. MRTT frame 2420 may not comprise a second indication of whether the transmission between AP 2410 and STA 2413 is an uplink transmission or a downlink transmission. For example, STAs 2411, 2412 and 2413 may determine whether the transmission between AP 2410 and STA 2413 is an uplink transmission or a downlink transmission, based on the order of the user info fields in the user info field list and/or the individual TXS modes in the user info fields (if present). In case MRTT frame 2420 comprises the second indication, the second indication may be provided in the common info field of MRTT frame 2420. The second indication may be provided in one of the reserved bits (e.g., B22, B26, B53 or B63) of the common info field as shown in FIG. 12.

STA 2411 may determine that it is being triggered by MRTT frame 2420 to send (e.g., transmit) a downlink frame (to be received from AP 2410) to STA 2412 during the first time period (t1), and that it has to send a frame to STA 2412 to inform it of the relaying operation and the allocation of the second time period (t2) to STA 2412, for example, based on receiving MRTT frame 2420. STA 2411 may make this determination based on the first indication, the second indication, the third indication and/or the order of the first user info field and the second user info field in the user info field list of MRTT frame 2420. STA 2411 may determine that it has to send (e.g., transmit) a frame 2422 to STA 2412 to inform it of the relaying operation and the allocation of the second time period (t2) to STA 2412, for example, based on the first indication (e.g., Flag3 in FIG. 24) and the second indication (e.g., Flag1 in FIG. 24). STA 2411 may determine that it is to relay a downlink frame transmission, where it is to receive the downlink frame transmission from AP 2410, for example, based on the third indication (e.g., Flag2 in FIG. 24) and the presence of its AID12 address in the first occurring user info field in the user info field list of MRTT frame 2420 (the first user info field). STA 2411 may determine that the downlink frame transmission is to be relayed to STA 2412, for example, based on the second indication (e.g., Flag1 in FIG. 24) and the presence of the AID12 address of STA 2412 in the second occurring user info field in the user info field list (the second user info field).

STA 2411 may send (e.g., transmit) a CTS frame 2421 to AP 2410 before sending (e.g., transmitting) frame 2422 to STA 2412, for example, after receiving MRTT frame 2420 from AP 2410. STA 2411 may not send (e.g., transmit) a CTS frame to AP 2410 before sending (e.g., transmitting) frame 2422 to STA 2412. Frame 2422 may comprise/indicate the second allocation to STA 2412 (contained in MRTT frame 2420) or the allocation of the second time period to STA 2412. Frame 2422 may comprise an MRTT frame. Frame 2422 may be identical to MRTT frame 2420. That is, STA 2411 may simply repeat MRTT frame 2420. The data content of frame 2422 may be the same as the data content of MRTT frame 2420. Frame 2422 may comprise a request-to-send (RTS) frame or an extended control frame. The RTS frame or the extended control frame may comprise/indicate the second allocation to STA 2412 (contained in MRTT frame 2420) or the allocation of the second time period to STA 2412. The RTS or the extended control frame may further comprise an address of STA 2412 as a receiver address. The RTS frame or the extended control frame may further comprise an address of STA 2413 as a destination address. The RTS frame or the extended control frame may further comprise an indication of a transmission between AP 2410 and STA 2413 via STAs 2411 and 2412 (indication of a relay transmission between AP 2410 and STA 2413).

STA 2412 may determine that it is being triggered by AP 2410 to send (e.g., transmit) a downlink frame to STA 2413 (downlink frame to be received from STA 2411) during the second time period (t2), for example, based on receiving frame 2422 from STA 2411. STA 2412 may make this determination based on the first indication, the second indication, the third indication, and/or the order of the first user info field, the second user info field and the third user info field in the user info field list of frame 2422, for example, where frame 2422 is a repetition of MRTT frame 2420 or where frame 2420 comprises the same data content as MRTT frame 2420. STA 2412 determines it is outside the communication range of AP 2410 for the relaying operation, for example, based on the first indication and receiving frame 2422 from STA 2411. STA 2412 may determine that it is to send (e.g., transmit) a downlink frame, for example, based on the third indication and the presence of its AID12 address in the second occurring user info field in the user info field list of MRTT frame 2422 (the second user info field). STA 2412 may determine that the downlink frame transmission is to be relayed to STA 2413, for example, based on the second indication and the presence of the AID12 address of STA 2413 in the third occurring user info field in the user info field list (the last user info field).

STA 2412 may make this determination based on the indication of a transmission between the AP 2410 and STA 2413 via STAs 2411 and 2412, the allocation of the second time period to STA 2412 and the presence of an address of STA 2413 as a destination address, for example, where frame 2422 is an RTS frame or an extended control frame. STA 2412 may determine that it is to initiate a downlink frame transmission to STA 2413 based on the indication of a transmission between the AP 2410 and STA 2413 via STAs 2411 and 2412, and/or an indication of a downlink transmission, provided in a frame control field of the RTS frame, for example, where frame 2422 is an RTS frame. For example, based on the allocation of the second time period provided in duration/ID field, an address of STA 2412 provided as a receiver address and an address of STA 2413 provided as a destination address, it may further determine that the downlink frame transmission is to be relayed to STA 2413.

STA 2412 may determine that it is to initiate a downlink frame transmission to STA 2413 based on the indication of a transmission between the AP 2410 and STA 2413 via STAs 2411 and 2412, and/or an indication of a downlink transmission, provided in afield of the extended control frame, for example, where frame 2422 is an extended control frame. An address of STA 2412 provided as a receiver address and an address of STA 2413 provided as a destination address, it may further determine that the downlink frame transmission is to be relayed to STA 2413, for example, based on the allocation of the second time period provided in duration/ID field.

STA 2411 may receive PPDU 2423 from AP 2410, for example, after sending (e.g., transmitting) frame 2422 to STA 2412. STA 2411 may send (e.g., transmit) an ACK frame 2424 to AP 2410, for example, based on (e.g., in response to) PPDU 2423. STA 2411 may not send (e.g., transmit) an ACK frame if an implicit ACK procedure is used. STA 2411 may send (e.g., transmit) a CTS frame 2425 at the beginning of the first time period (t1) before sending (e.g., transmitting) a PPDU 2426 to STA 2412. STA 2411 may not send (e.g., transmit) a CTS frame before sending (e.g., transmitting) PPDU 2426 to STA 2412, for example, after receiving PPDU 2423 from AP 2410. The time period, t1, for this transmission may start with the transmission of ACK frame 2424. The time period, t1, for this transmission may start with the transmission of CTS frame 2425. PPDU 2426 may be based on PPDU 2423. The data payload of PPDU 2426 may be the same as the data payload of PPDU 2423. STA 2411 may receive an ACK frame 2427 from STA 2412, based on (e.g., in response to) PPDU 2426.

STA 2412 may send (e.g., transmit) a CTS frame 2428 at the beginning of the second time period (t2) before sending (e.g., transmitting) a PPDU 2429 to STA 2413, for example, after receiving PPDU 2426 from STA 2411. STA 2412 may not send (e.g., transmit) a CTS frame before sending (e.g., transmitting) PPDU 2429 to STA 2413. The time period, t2, for this transmission may start with the transmission of ACK frame 2427. The time period, t2, for this transmission may start with the transmission of CTS frame 2428. PPDU 2429 may be based on PPDU 2426. The data payload of PPDU 2429 may be the same as the data payload of PPDU 2426. STA 2412 may receive an ACK frame 2430 from STA 2413, based on (e.g., in response to) PPDU 2429. ACK frames 2424, 2427 and 2430 may be block ACK (BA) frames.

As shown as "Option b" in FIG. 24, MRTT frame 2420 may not comprise the third allocation and may only comprise the first allocation and the second allocation with the receiver addresses indicated. The first allocation and the second allocation may each further comprise an identifier of a receiver STA. For example, the first allocation to STA 2411 may comprise an identifier of STA 2412 as a receiver STA. This means that STA 2411 should relay/send/transmit the downlink frame to STA 2412. Similarly, the second allocation to STA 2412 may comprise an identifier of STA 2413 as a receiver STA. This means that STA 2412 should relay/send/transmit the downlink frame to STA 2413. As the second allocation to STA 2412 is the last allocation in the list of allocations (e.g., user info fields) in MRTT frame 2420, the identification of STA 2413 in the second allocation indicates that STA 2413 is the destination STA of the downlink frame. An identifier of a receiver STA may be provided in the reserved bits of the user info field as shown in FIG. 11. MRTT frame 2420 may further comprise a first indication (e.g., Flag3 in FIG. 24) of transmission of a frame, by STA 2411, wherein the frame indicates allocation of the second time period to STA 2412. MRTT frame 2420 may further comprise a second indication (e.g., Flag1 in FIG. 24) that the first time period and the second time period are for a transmission between the AP and STA 2413 via STAs 2411 and 2412 (e.g., a relay transmission).

The TXS-based relaying procedure as described with respect to FIG. 24 may ensure that STA 2412 may be triggered to perform the downlink relay transmission to STA 2413, despite STA 2412 being outside the communication range of AP 2410. As would be understood by a person of skill in the art based on the teachings herein, the TXS-based relaying procedure of FIG. 24 may also solve the problem that would arise if STA 2412 fails to receive MRTT frame 2420 despite being within the communication range of AP 2410. Such an example may be thus also within the scope of examples of the present disclosure.

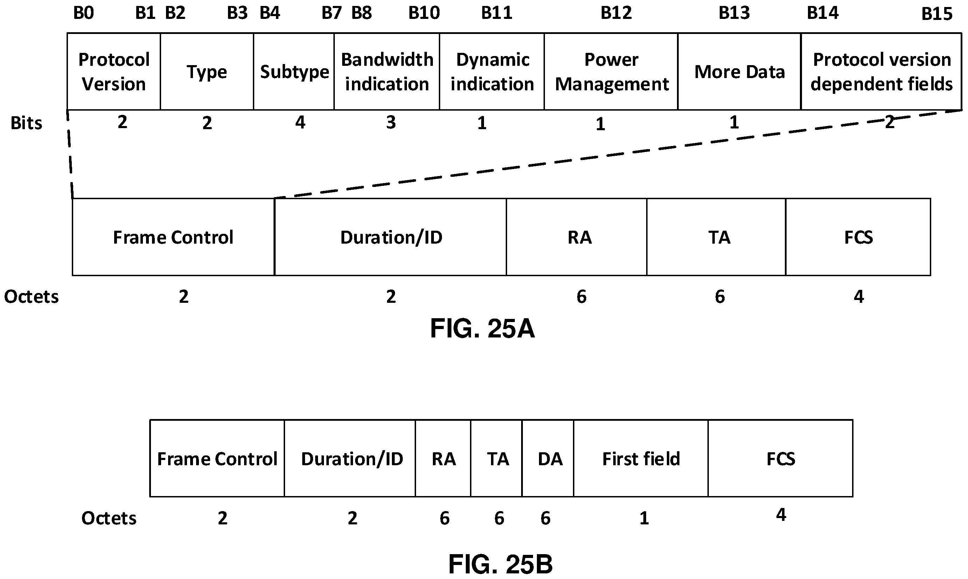

FIG. 25A shows an example of an RTS frame. For example, frame 2022, 2122, and/or 2422 may comprise an RTS frame. As shown in FIG. 25A, for example, an RTS frame may comprise a Frame Control field, a duration/ID field, a receiver address (RA) field, a transmitter address (TA) field, and an FCS field. The duration/ID field may be used to indicate the time period allocated by the AP to the STA that may be out of communication range with the AP (out-of-range STA). The RA field may be used to indicate the address of the out-of-range STA.

The Frame Control field may be used to provide an indication of a transmission between the AP and the out-of-range STA via one or more relay STAs and/or an indication of uplink transmission or downlink transmission. The indications may be included in a Power Management field or a More Data field of the Frame Control field.

The out-of-range STA may send (e.g., transmit) an uplink frame to the STA which address may be indicated in the TA field of the RTS frame, for example, if the RTS frame includes an indication of an uplink transmission. The out-of-range STA may send (e.g., transmit) the downlink frame that it may receive from the STA indicated by the TA field to a STA indicated in a destination address (DA) (not shown in FIG. 25A) of the RTS frame, for example, where the RTS frame may include an indication of a downlink transmission.

FIG. 25B shows an example of an extended control frame. For example, frame 2022, 2122, and/or 2422 may also comprise an extended control frame. As shown in FIG. 25B, an extended control frame may comprise a Frame Control field, a duration/ID field, a receiver address (RA) field, a transmitter address (TA) field, a destination address (DA) field, a first field, and an FCS field. The duration/ID field may be used to indicate the time period allocated by the AP to the STA that is out of communication range with the AP (out-of-range STA). The RA field may be used to indicate the address of the out-of-range STA.

The first field may be used to provide an indication of a transmission between the AP and the out-of-range STA via one or more relay STAs and/or an indication of uplink transmission or downlink transmission. The out-of-range STA may send (e.g., transmit) an uplink frame to the STA which address may be indicated in the TA field of the extended control frame, for example, if the extended control frame includes an indication of an uplink transmission. The out-of-range STA may send (e.g., transmit) the downlink frame that it may receive from the STA indicated by the TA field to a STA indicated in a destination address (DA) of the extended control frame, for example, where the extended control frame may include an indication of a downlink transmission.

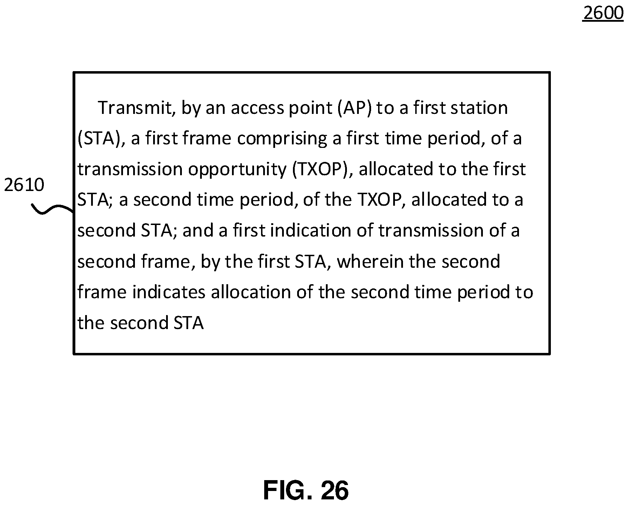

FIG. 26 shows an example method of a relaying procedure. For example, as shown in FIG. 26, at step 2610, an access point may send (e.g., transmit), to a first STA, a first frame comprising a first time period, of a TXOP, allocated to the first STA, a second time period, of the TXOP, allocated to a second STA, and/or a first indication that the first STA may send a second frame. The second frame may indicate the allocation of the second time period to the second STA.

The first frame may comprise a multi-user request-to-send triggered TXOP sharing (MU-RTS TXS) trigger (MRTT) frame. The first indication of transmission of the second frame may be provided in a common info field of the MRTT frame.

The first frame may comprise a second indication that the first time period and/or the second time period may be for a transmission between the AP and the second STA via the first STA. Additionally or alternatively, the first frame may comprise a second indication that the first time period and/or the second time period may be for a transmission between the AP and a third STA via the first STA and/or the second STA. For example, the second indication may be provided in a TXS mode subfield of the MRTT frame. For example, the TXS mode subfield may be provided in a common info field of the MRTT frame, for example, where the TXS mode subfield may be set to 3. For example, the first frame may indicate an uplink transmission and/or a downlink transmission.

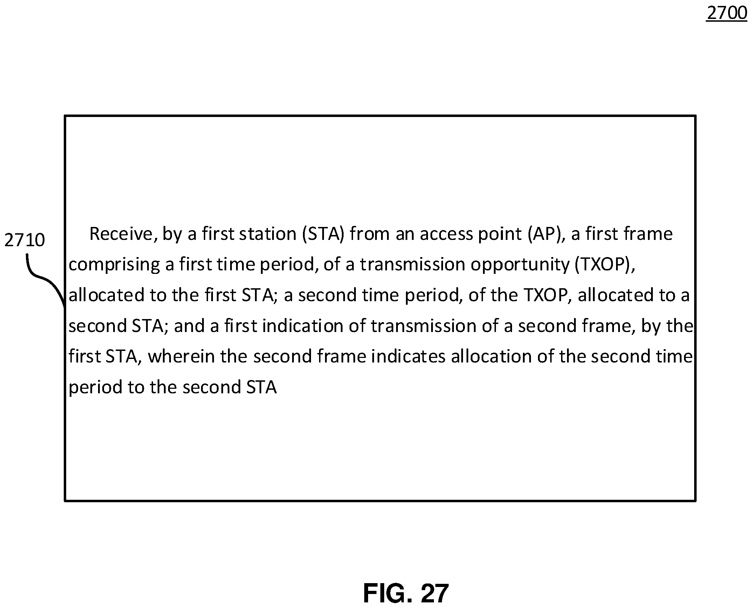

FIG. 27 shows an example method a relaying procedure. For example, as shown in FIG. 27, at step 2710, a first STA may receive, from an AP, a first frame comprising a first time period, of a TXOP, allocated to the first STA, a second time period, of the TXOP, allocated to a second STA, and/or a first indication that the first STA may send a second frame. The second frame may indicate the allocation of the second time period to the second STA. For example, the first STA may further send (e.g., transmit), to the second STA, the second frame. For example, the first frame may further indicate an uplink transmission. For example, the first time period may be after the second time period. For example, the first time period may be a short inter-frame space (SIFS) after the second time period. For example, the first STA may further receive, from the second STA, a third frame based on (e.g., in response to) the second frame, for example, during the second time period. For example, the first STA may further receive, from the second STA, a clear-to-send (CTS) frame, for example, before the third frame. For example, the first STA may further send (e.g., transmit), to the AP, a fourth frame after receiving the third frame, for example, during the first time period.

Additionally or alternatively, the first frame may further indicate a downlink transmission. For example, the first time period may be before the second time period. For example, the second time period may be a short inter-frame space (SIFS) after the first time period. For example, the first STA may further receive, from the AP, a third frame after sending (e.g., transmitting) the second frame and before the first time period. For example, the first STA may further send (e.g., transmit), to the second STA, a fourth frame after the third frame, for example, during the first time period.

The first frame may comprise a multi-user request-to-send triggered TXOP sharing (MU-RTS TXS) trigger (MRTT) frame. The first indication of transmission of a second frame may be provided in a common info field of the MRTT frame.

The first frame may further comprise a second indication that the first time period and/or the second time period may be for a transmission between the AP and the second STA via the first STA. Additionally or alternatively, the first frame may comprise a second indication that the first time period and the second time period may be for a transmission between the AP and a third STA via the first STA and the second STA. The second indication may be provided in a TXS mode subfield of the MRTT frame. The TXS mode subfield may be provided in a common info field of the MRTT frame, for example, where the TXS mode subfield may be set to 3.

The second frame may comprise an MRTT frame. The MRTT frame may be identical to the first frame. The second frame may comprise a request-to-send (RTS) frame or an extended control frame. The RTS frame or the extended control frame may comprise the allocation of the second time period and an address of the second STA as a receiver address. The RTS frame or the extended control frame may further comprise an indication of a transmission between the AP and the second STA via the first STA. The RTS frame or the extended control frame may further comprise an indication of a transmission between the AP and the third STA via the first STA and the second STA. The third frame and the fourth frame may be physical layer protocol data units (PPDUs).

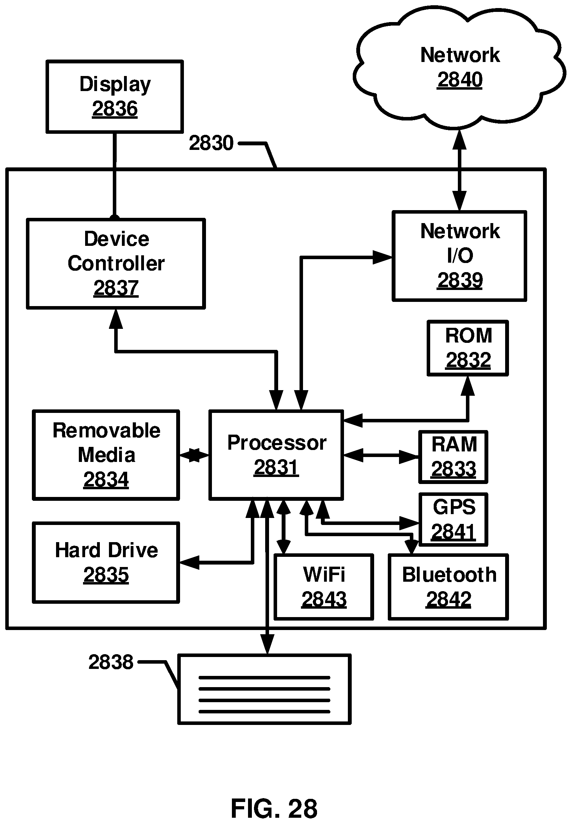

FIG. 28 shows example elements of a computing device that may be used to implement any of the various devices described herein, including, for example, a STA, an AP, communication devices, and/or any computing and/or communication device described herein. The computing device 2830 may comprise one or more processors 2831, which may execute instructions stored in the random-access memory (RAM) 2833, the removable media 2834 (such as a Universal Serial Bus (USB) drive, compact disk (CD) or digital versatile disk (DVD), or floppy disk drive), or any other desired storage medium. Instructions may also be stored in an attached (or internal) hard drive 2835. The computing device 2830 may also comprise a security processor (not shown), which may execute instructions of one or more computer programs to monitor the processes executing on the processor 2831 and any process that requests access to any hardware and/or software components of the computing device 2830 (e.g., ROM 2832, RAM 2833, the removable media 2834, the hard drive 2835, the device controller 2837, a network interface 2839, a GPS 2841, a Bluetooth interface 2842, a WiFi interface 2843, etc.). The computing device 2830 may comprise one or more output devices, such as the display 2836 (e.g., a screen, a display device, a monitor, a television, etc.), and may comprise one or more output device controllers 2837, such as a video processor. There may also be one or more user input devices 2838, such as a remote control, keyboard, mouse, touch screen, microphone, etc. The computing device 2830 may also comprise one or more network interfaces, such as a network interface 2839, which may be a wired interface, a wireless interface, or a combination of the two. The network interface 2839 may provide an interface for the computing device 2830 to communicate with a network 2840 (e.g., a RAN, or any other network). The network interface 2839 may comprise a modem (e.g., a cable modem), and the external network 2840 may comprise communication links, an external network, an in-home network, a provider's wireless, coaxial, fiber, or hybrid fiber/coaxial distribution system (e.g., a DOCSIS network), or any other desired network. Additionally, the computing device 2830 may comprise a location-detecting device, such as a global positioning system (GPS) microprocessor 2841, which may be configured to receive and process global positioning signals and determine, with possible assistance from an external server and antenna, a geographic position of the computing device 2830.

The example in FIG. 28 may be a hardware configuration, although the components shown may be implemented as software as well. Modifications may be made to add, remove, combine, divide, etc. components of the computing device 2830 as desired. Additionally, the components may be implemented using basic computing devices and components, and the same components (e.g., processor 2831, ROM storage 2832, display 2836, etc.) may be used to implement any of the other computing devices and components described herein. For example, the various components described herein may be implemented using computing devices having components such as a processor executing computer-executable instructions stored on a computer-readable medium, as shown in FIG. 28. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a first computing device from an access point, a first frame comprising a first time period, of a transmission opportunity (TXOP), allocated for communication by the first computing device; a second time period, of the TXOP, allocated for communication by a second computing device; and a first indication for transmission of a second frame, by the first computing device, wherein the second frame indicates that the second time period is allocated for communication by the second computing device.

Clause 2. The method of clause 1, further comprising sending, based on the first indication, the second frame.

Clause 3. The method of any one of clauses 1 to 2, wherein the first frame further comprises a second indication.

Clause 4. The method of any one of clauses 1 to 3, wherein the second indication indicates that the first time period and the second time period are allocated for transmission between at least one of: the access point and the second computing device via the first computing device; or the access point and a third computing device via the first computing device and via the second computing device.

Clause 5. The method of any one of clauses 1 to 4, wherein the first frame further indicates an uplink transmission.

Clause 6. The method of any one of clauses 1 to 5, wherein the first time period is after the second time period.

Clause 7. The method of any one of clauses 1 to 6, further comprising receiving, after sending the second frame and before the first time period, by the first computing device and from the access point, a third frame.

Clause 8. The method of any one of clauses 1 to 7, further comprising sending, during the first time period, by the first computing device and to the second computing device, a fourth frame based on the third frame.

Clause 9. The method of any one of clauses 1 to 8, wherein the first frame comprises a multi-user request-to-send triggered TXOP sharing (MU-RTS TXS) trigger (MRTT) frame.

Clause 10. The method of any one of clauses 1 to 9, wherein the first indication of transmission of the second frame is based on a common info field of a multi-user request-to-send triggered TXOP sharing (MU-RTS TXS) trigger (MRTT) frame.

Clause 11. The method of any one of clauses 1 to 10, wherein the second frame comprises at least one of: a request-to-send (RTS) frame, or an extended control frame.

Clause 12. The method of any one of clauses 1 to 11, further comprising receiving, before the third frame, by the first computing device and from the second computing device, a clear-to-send (CTS) frame.

Clause 13. The method of any one of clauses 1 to 12, wherein the first time period is a short inter-frame space (SIFS) after the second time period.

Clause 14. The method of any one of clauses 1 to 13, wherein the second frame comprises a multi-user request-to-send triggered TXOP sharing (MU-RTS TXS) trigger (MRTT) frame, and wherein the MRTT frame is identical to the first frame.

Clause 15. The method of any one of clauses 1 to 14, wherein the first time period is after the second time period.

Clause 16. The method of any one of clauses 1 to 15, further comprising receiving, by the first computing device from the second computing device, a third frame in response to the second frame, during the second time period.

Clause 17. The method of any one of clauses 1 to 16, further comprising transmitting, by the first computing device to the access point, a fourth frame after receiving the third frame, during the first time period.

Clause 18. The method of any one of clauses 1 to 17, wherein the first frame further indicates a downlink transmission.

Clause 19. The method of any one of clauses 1 to 18, wherein the first time period is before the second time period.

Clause 20. The method of any one of clauses 1 to 19, wherein the second time period is a short interframe space (SIFS) after the first time period.

Clause 21. The method of any one of clauses 1 to 20, further comprising receiving, by the first computing device from the access point, a third frame after transmitting the second frame and before the first time period.

Clause 22. The method of any one of clauses 1 to 21, further comprising transmitting, by the first computing device to the second computing device, a fourth frame after the third frame, during the first time period.

Clause 23. The method of any one of clauses 1 to 22, wherein the first frame comprises a multi-user request-to-send triggered TXOP sharing (MU-RTS TXS) trigger (MRTT) frame.

Clause 24. The method of any one of clauses 1 to 23, wherein the first indication of transmission of a second frame is provided in a common info field of the MRTT frame.

Clause 25. The method of any one of clauses 1 to 24, wherein the first frame further comprises a second indication that the first time period and the second time period are for a transmission, between the access point and the second computing device via the first computing device, or between the access point and the third computing device via the first computing device and the second computing device.

Clause 26. The method of any one of clauses 1 to 25, wherein the second indication is provided in a TXS mode subfield of the MRTT frame.

Clause 27. The method of any one of clauses 1 to 26, wherein the TXS mode subfield is provided in a common info field of the MRTT frame, and wherein the TXS mode subfield is set to 3.

Clause 28. The method of any one of clauses 1 to 27, wherein the second frame comprises an MRTT frame, and wherein the MRTT frame is identical to the first frame.

Clause 29. The method of any one of clauses 1 to 28, wherein the second frame comprises a request-to-send (RTS) frame or an extended control frame.

Clause 30. The method of any one of clauses 1 to 29, wherein the RTS frame or the extended control frame comprises the allocation of the second time period and an address of the second computing device as a receiver address.

Clause 31. The method of any one of clauses 1 to 30, wherein the RTS frame or the extended control frame further comprises an indication of a transmission between the access point and the second computing device via the first computing device, or an indication of a transmission between the access point and the third computing device via the first computing device and the second computing device.

Clause 32. The method of any one of clauses 1 to 31 wherein the third frame and the fourth frame are physical layer protocol data units (PPDUs).

Clause 33. A computing device comprising: one or more processors; and memory storing instructions that, when executed by the one or more processors, cause the computing device to perform the method of any one of clauses 1 to 32.

Clause 34. A system comprising: a computing device configured to perform the method of any one of clauses 1 to 32; and an access point configured to send the first frame.

Clause 35. A computer-readable medium storing instructions that, when executed, cause performance of the method of any one of clauses 1 to 32.

Clause 36. A method comprising receiving, by a first computing device from an access point, a first frame comprising: a first indication indicating an allocation of a time period for communication by a second computing device, and a second indication indicating that the first computing device is to be used as a relay device for communication by the second computing device during the time period.

Clause 37. The method of clause 36, further comprising sending, to the second computing device, a second frame comprising the first indication indicating the allocation of the time period for communication by the second computing device.

Clause 38. The method of any one of clauses 36 to 37, wherein the first frame further comprises a second time period for communication by the first computing device.

Clause 39. The method of any one of clauses 36 to 38, wherein the second indication is based on a triggered transmission opportunity (TXOP) sharing (TXS) mode subfield of a multi-user request-to-send triggered TXOP sharing (MU-RTS TXS) trigger (MRTT) frame.

Clause 40. The method of any one of clauses 36 to 39, wherein the first frame comprises a multi-user request-to-send triggered TXOP sharing (MU-RTS TXS) trigger (MRTT) frame.

Clause 41. The method of any one of clauses 36 to 40, wherein the first frame further indicates an uplink transmission.

Clause 42. The method of any one of clauses 36 to 41, wherein the second frame comprises a request-to-send (RTS) frame or an extended control frame.

Clause 43. A computing device comprising: one or more processors; and memory storing instructions that, when executed by the one or more processors, cause the computing device to perform the method of any one of clauses 36 to 42.

Clause 44. A system comprising: a computing device configured to perform the method of any one of clauses 36 to 42; and an access point configured to send the first frame.

Clause 45. A computer-readable medium storing instructions that, when executed, cause performance of the method of any one of clauses 36 to 40.

Clause 46. A method comprising sending, by an access point to a first computing device, a first frame comprising: a first time period, of a transmission opportunity (TXOP), allocated for communication by the first computing device; a second time period, of the TXOP, allocated for communication by a second computing device; and a first indication of transmission of a second frame, by the first computing device.

Clause 47. The method of clause 46, wherein the second frame indicates that the second time period is allocated for communication by the second computing device.

Clause 48. The method of any one of clauses 46 to 47, further comprising receiving, by the access point and from the second computing device via the first computing device, the second frame.

Clause 49. The method of any one of clauses 46 to 48, wherein the first frame comprises a multi-user request-to-send triggered TXOP sharing (MU-RTS TXS) trigger (MRTT) frame.

Clause 50. The method of any one of clauses 46 to 49, wherein the first indication of transmission of the second frame is based on a common info field of a multi-user request-to-send triggered transmission opportunity (TXOP) sharing (MU-RTS TXS) trigger (MRTT) frame.

Clause 51. The method of any one of clauses 46 to 50, wherein the first frame further comprises a second indication.

Clause 52. The method of any one of clauses 46 to 51, wherein the second indication indicates that the first time period and the second time period are allocated for transmission between at least one of: the access point and the second computing device via the first computing device; or the computing device and a third computing device via the first computing device and the second computing device.

Clause 53. The method of any one of clauses 46 to 52, wherein the first frame further indicates an uplink transmission or a downlink transmission.

Clause 54. The method of any one of clauses 46 to 53, wherein the second indication is provided in a TXS mode subfield of the MRTT frame.

Clause 55. The method of any one of clauses 46 to 54, wherein the TXS mode subfield is provided in a common info field of the MRTT frame, and wherein the TXS mode subfield is set to 3.

Clause 56. A computing device comprising: one or more processors; and memory storing instructions that, when executed by the one or more processors, cause the computing device to perform the method of any one of clauses 46 to 55.

Clause 57. A system comprising: an access point configured to perform the method of any one of clauses 46 to 55; and a computing device configured to receive the first frame.

Clause 58. A computer-readable medium storing instructions that, when executed, cause performance of the method of any one of clauses 46 to 55.

A computing device may perform a method comprising multiple operations. A first computing device may receive, from an access point, a first frame. The first frame may comprise a first time period, of a transmission opportunity (TXOP), allocated for communication by the first computing device, a second time period, of the TXOP, allocated for communication by a second computing device, and/or a first indication that may indicate that the first computing device may send a second frame. The second frame may indicate that the second time period may be allocated for communication by the second computing device. The first computing device may send the second frame, for example, based on the first indication. The first frame may further comprise a second indication. The second indication may indicate that the first time period and the second time period may be allocated for transmission between at least one of: the access point and the second computing device via the first computing device; or the access point and a third computing device via the first computing device and/or via the second computing device. The first frame may further indicate an uplink transmission. The first time period may be after the second time period. The first computing device may receive, from the access point, a third frame, for example, after sending the second frame and before the first time period. The first computing device may send, to the second computing device, a fourth frame based on the third frame, for example, during the first time period. The first frame may comprise a multi-user request-to-send triggered TXOP sharing (MU-RTS TXS) trigger (MRTT) frame. The first indication of transmission of the second frame may be based on a common info field of a multi-user request-to-send triggered TXOP sharing (MU-RTS TXS) trigger (MRTT) frame. The second frame may comprise at least one of: a request-to-send (RTS) frame, or an extended control frame. The first computing device may receive, from the second computing device, a clear-to-send (CTS) frame, for example, before the third frame. The first time period may be a short inter-frame space (SIFS) after the second time period. The second frame may comprise a multi-user request-to-send triggered TXOP sharing (MU-RTS TXS) trigger (MRTT) frame. The MRTT frame may be identical to the first frame. The first time period may be after the second time period. The first computing device may receive, from the second computing device, a third frame based on (e.g., in response to) the second frame, for example, during the second time period. The first computing device may send (e.g., transmit), to the access point, a fourth frame after receiving the third frame, for example, during the first time period. The first frame may further indicate a downlink transmission. The first time period may be before the second time period. The second time period may be a short inter-frame space (SIFS) after the first time period. The first computing device may receive, from the access point, a third frame after transmitting the second frame and before the first time period. The first computing device may send (e.g., transmit), to the second computing device, a fourth frame after the third frame, during the first time period. The first frame may comprise a multi-user request-to-send triggered TXOP sharing (MU-RTS TXS) trigger (MRTT) frame. The first indication of transmission of a second frame may be provided in a common info field of the MRTT frame. The first frame may further comprise a second indication that the first time period and the second time period may be for a transmission, between the access point and the second computing device via the first computing device, or between the access point and the third computing device via the first computing device and the second computing device. The second indication may be provided in a TXS mode subfield of the MRTT frame. The TXS mode subfield may be provided in a common info field of the MRTT frame. The TXS mode subfield may be set to 3. The second frame may comprise an MRTT frame. The MRTT frame may be identical to the first frame. The second frame may comprise a request-to-send (RTS) frame or an extended control frame. The RTS frame or the extended control frame may comprise the allocation of the second time period and an address of the second computing device as a receiver address. The RTS frame or the extended control frame may further comprise an indication of a transmission between the access point and the second computing device via the first computing device, or an indication of a transmission between the access point and the third computing device via the first computing device and the second computing device. The third frame and the fourth frame may be physical layer protocol data units (PPDUs). The computing device may comprise one or more processors; and memory storing instructions that, when executed by the one or more processors, cause the computing device to perform the described method, additional operations and/or include the additional elements. A system may comprise a computing device configured to perform the described method, additional operations and/or include the additional elements; and an access point configured to send the first frame. A computer-readable medium may store instructions that, when executed, cause performance of the described method, additional operations, and/or include the additional elements.

A computing device may perform a method comprising multiple operations. A first computing device may receive, from an access point, a first frame that may comprise a first indication indicating an allocation of a time period for communication by a second computing device, and/or a second indication indicating that the first computing device is to be used as a relay device for communication by the second computing device during the time period. The first computing device may send, to the second computing device, a second frame comprising the first indication indicating the allocation of the time period for communication by the second computing device. The first frame further may comprise a second time period for communication by the first computing device. The second indication may be based on a triggered transmission opportunity (TXOP) sharing (TXS) mode subfield of a multi-user request-to-send triggered TXOP sharing (MU-RTS TXS) trigger (MRTT) frame. The first frame may comprise a multi-user request-to-send triggered TXOP sharing (MU-RTS TXS) trigger (MRTT) frame. The first frame may further indicate an uplink transmission. The second frame may comprise a request-to-send (RTS) frame or an extended control frame. The computing device may comprise one or more processors; and memory storing instructions that, when executed by the one or more processors, cause the computing device to perform the described method, additional operations and/or include the additional elements. A system may comprise a computing device configured to perform the described method, additional operations and/or include the additional elements; and an access point configured to send the first frame. A computer-readable medium may store instructions that, when executed, cause performance of the described method, additional operations, and/or include the additional elements.

An access point may perform a method comprising multiple operations. The access point may send, to a first computing device, a first frame comprising: a first time period, of a transmission opportunity (TXOP), allocated for communication by the first computing device; a second time period, of the TXOP, allocated for communication by a second computing device; and a first indication of transmission of a second frame, by the first computing device. The second frame may indicate that the second time period may be allocated for communication by the second computing device. The access point may receive, from the second computing device via the first computing device, the second frame. The first frame may comprise a multi-user request-to-send triggered TXOP sharing (MU-RTS TXS) trigger (MRTT) frame. The first indication of transmission of the second frame may be based on a common info field of a multi-user request-to-send triggered transmission opportunity (TXOP) sharing (MU-RTS TXS) trigger (MRTT) frame. The first frame further may comprise a second indication. The second indication may indicate that the first time period and the second time period are allocated for transmission between at least one of: the access point and the second computing device via the first computing device; or the computing device and a third computing device via the first computing device and the second computing device. The first frame further may indicate an uplink transmission or a downlink transmission. The second indication may be provided in a TXS mode subfield of the MRTT frame. The TXS mode subfield may be provided in a common info field of the MRTT frame. The TXS mode subfield may be set to 3. The computing device may comprise one or more processors; and memory storing instructions that, when executed by the one or more processors, cause the computing device to perform the described method, additional operations and/or include the additional elements. A system may comprise an access point configured to perform the described method, additional operations and/or include the additional elements; and a computing device configured to receive the first frame. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices (MLDs), stations (stations), non-AP stations, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a first computing device from an access point, a first frame comprising:
a first time period, of a transmission opportunity (TXOP), allocated for communication by the first computing device;
a second time period, of the TXOP, allocated for communication by a second computing device; and
a first indication for transmission of a second frame, by the first computing device, wherein the second frame indicates that the second time period is allocated for communication by the second computing device; and
sending, based on the first indication, the second frame.

2. The method of claim 1, wherein the first frame further comprises a second indication, and wherein the second indication indicates that the first time period and the second time period are allocated for transmission between at least one of:
the access point and the second computing device via the first computing device; or
the access point and a third computing device via the first computing device and via the second computing device.

3. The method of one of any claims 1 to 2, wherein the first frame further indicates an uplink transmission.

4. The method of one of any claims 1 to 3, wherein the first time period is after the second time period.

5. The method of one of any claims 1 to 4, further comprising receiving, after sending the second frame and before the first time period, by the first computing device and from the access point, a third frame.

6. The method of one of any claims 1 to 5, further comprising sending, during the first time period, by the first computing device and to the second computing device, a fourth frame based on the third frame.

7. The method of one of any claims 1 to 6, wherein the first frame comprises a multi-user request-to-send triggered TXOP sharing (MU-RTS TXS) trigger (MRTT) frame.

8. The method of one of any claims 1 to 7, wherein the first indication of transmission of the second frame is based on a common info field of a multi-user request-to-send triggered TXOP sharing (MU-RTS TXS) trigger (MRTT) frame.

9. The method of one of any claims 1 to 8, wherein the second frame comprises at least one of: a request-to-send (RTS) frame, or an extended control frame.

10. The method of one of any claims 1 to 6, further comprising receiving, before the third frame, by the first computing device and from the second computing device, a clear-to-send (CTS) frame.

11. The method of one of any claims 1 to 7, wherein the first time period is a short inter-frame space (SIFS) after the second time period.

12. The method of one of any claims 1 to 8, wherein the second frame comprises a multi-user request-to-send triggered TXOP sharing (MU-RTS TXS) trigger (MRTT) frame, and wherein the MRTT frame is identical to the first frame.

13. A computing device comprising:
one or more processors; and
memory storing instructions that, when executed by the one or more processors, cause the computing device to perform the method of any one of claims 1 to 12.

14. A system comprising:
a computing device configured to perform the method of any one of claims 1 to 12; and
an access point configured to send the first frame.

15. A computer-readable medium storing instructions that, when executed, cause performance of the method of any one of claims 1 to 12.
